# EUROPEAN PATENT APPLICATION

(11) **EP 4 617 944 A1**
(43) Date of publication of application: **17.09.2025**
(21) Application number: 25161619.9
(22) Date of filing: 04.03.2025
(51) Int. Cl.: G06F 40/279, G06F 40/30, G06F 40/35, G06F 40/56, G06N 20/00

(54) **REAL-TIME DOMAIN-SPECIFIC ISSUE DETECTION AND RESPONSE GENERATION USING ARTIFICIAL INTELLIGENCE**

(30) Priority: 15.03.2024 US 202418607169
(71) Applicant: Microsoft Technology Licensing, LLC, Redmond, WA 98052 (US)
(72) Inventor: TSVETKOV, Alexander, Redmond, Washington 98052 (US); ASI, Abedelkader, Redmond, Washington 98052 (US)
(74) Representative: CMS Cameron McKenna Nabarro Olswang LLP

(57) **Abstract**

Techniques are described herein that are capable of using AI to perform real-time domain-specific issue detection and response generation. A domain-specific negative sentiment is detected in a statement of a first user from a domain-specific conversation between the first user and a second user in real-time during the domain-specific conversation using a first AI model. An indication of the domain-specific negative sentiment is converted into a query describing a domain-specific issue. Passages from domain-specific documents are ranked to provide relevancy ranks, which represent relevancies of the passages regarding mitigation of the domain-specific issue, using a second AI model. A subset of the passages is identified such that the relevancy rank of each passage in the subset satisfies a relevancy criterion. A response to the query is generated using the subset of the passages and presented to the second user. The response specifies a mitigating factor that mitigates the domain-specific issue.

## Description

### BACKGROUND

During a conversation regarding a particular domain, a participant in the conversation (e.g., a domain expert) may face issues or challenges that the participant does not know how to handle, which may cause the participant to lose credibility with other participant(s) in the conversation. For example, in an education domain, a student may indicate that that the student does not understand newly presented material. In a finance domain, a potential lendee may indicate that other banks offer a lower interest rate. In a sales domain, a potential buyer may indicate that competitors offer the same features for a lower price. In a customer support domain, a customer may indicate that delivery of a product or a service was too slow. In a cloud service domain, a customer may indicate that a cloud service is unstable. In a security domain, a user may indicate that an account of the user has been compromised.

Some issues that are encountered by the participant may be relatively straightforward (e.g., when another participant asks a direct question regarding a particular item in the domain of which the participant has substantial knowledge). However, the participant may not be able to identify from statements of the other participant(s) that an issue exists or to which issue the statements relate. Furthermore, even if the participant is able to identify an issue based on the statements of the other participant(s), the participant may not be able to provide guidance with regard to the issue without first performing research, which may cause an unacceptable delay in providing the guidance.

### SUMMARY

It may be desirable to use one or more artificial intelligence (AI) models to detect a domain-specific issue and to generate a response regarding the domain-specific issue in real-time (e.g., on the fly or on the spot) during a domain-specific conversation. An AI model is a model that utilizes artificial intelligence to generate an answer that is responsive to an AI prompt (a.k.a. prompt) that is received by the AI model. The AI model may be an artificial general intelligence model. An artificial general intelligence model is an AI model (e.g., an autonomous AI model) that is configured to be capable of performing any task that an animal (e.g., a human) is capable of performing. In an example implementation, the artificial general intelligence model is capable of performing a task that surpasses the capabilities of an animal.

Artificial intelligence is intelligence of a machine (e.g., a computing system) and/or code (e.g., software and/or firmware), as opposed to intelligence of an animal (e.g., a human). An AI prompt indicates (e.g., specifies) a task that is to be performed by an AI model. Examples of an AI prompt include but are not limited to a zero-shot prompt, a one-shot prompt, and a few-shot prompt. A zero-shot prompt is a prompt for which the prompt and/or its corresponding contextual information, which are to be processed by the AI model, is not included in pre-trained knowledge of the AI model. A one-shot prompt is a prompt that includes a target prompt along with a single example prompt and a single example answer that is responsive to the single example prompt. The example prompt and the example answer provide guidance as to how the AI model is expected to respond to the target prompt. A few-shot prompt is a prompt that includes a target prompt along with multiple example prompts and multiple example answers that are responsive to the respective example prompts. The example prompts and the example answers provide guidance as to how the AI model is expected to respond to the target prompt.

An AI prompt may be a natural language prompt. A natural language prompt is a prompt that is written in a natural language. A natural language is a human language that has developed through use and repetition. For instance, the natural language may have developed naturally without conscious planning or premeditation. Examples of a natural language include English, French, Spanish, and Mandarin.

In an example implementation, AI model(s) are trained using domain-specific data to detect a domain-specific issue and to generate a response regarding the domain-specific issue in real-time during a domain-specific conversation. In another example implementation, AI prompt(s) that are submitted to the AI model(s) include domain-specific examples that are usable by the AI model(s) to detect the domain-specific issue and to generate the response. By training the AI model(s) using the domain-specific data and/or including the domain-specific examples in the AI prompt(s), the domain-specific issue may be detected more accurately, precisely, and/or reliably, and a likelihood of the response mitigating the domain-specific issue may be increased. For instance, training the AI model(s) using the domain-specific data and/or including the domain-specific examples in the AI prompt(s) may enable the AI model(s) to detect a domain-specific negative sentiment from a domain-specific dialog that represents the domain-specific conversation, convert the domain-specific negative sentiment to a query that describes the domain-specific issue, rank passages from domain-specific documents based on (e.g., based at least on) relevancy to the domain-specific issue, and generate the response from a subset of the passages that is most relevant to mitigating the domain-specific issue.

Various approaches are described herein for, among other things, using AI to perform real-time domain-specific issue detection and response generation. In an example approach, a domain sentiment AI model is caused to detect a domain-specific negative sentiment, which is associated with a designated domain, in a statement of a first user, which is included in a domain-specific dialog that represents a domain-specific conversation between the first user and a second user, in real-time during the domain-specific conversation by providing a sentiment AI prompt together with at least a portion of the domain-specific dialog as inputs to the domain sentiment AI model. The sentiment AI prompt requests that the domain sentiment AI model determine whether the domain-specific dialog includes the domain-specific negative sentiment. The portion of the domain-specific dialog comprises context regarding the sentiment AI prompt. A response to the sentiment AI prompt is received from the domain sentiment AI model. The response to the sentiment AI prompt comprises an indication of the domain-specific negative sentiment. The indication of the domain-specific negative sentiment is caused to be converted into a query that describes a domain-specific issue. A passage ranking AI model is caused to rank passages, which are included in domain-specific documents, to provide relevancy ranks, which represent relevancies of the passages with regard to mitigation of the domain-specific issue, by providing a ranking AI prompt together with the passages and the query as inputs to the passage ranking AI model. The ranking AI prompt requests that the passage ranking AI model rank the passages based on relevancy to the mitigation of the domain-specific issue. The passages and the query comprise context regarding the ranking AI prompt. A response to the ranking AI prompt is received from the passage ranking AI model. The response to the ranking AI prompt comprises an indication of the relevancy ranks of the passages. A subset of the passages is identified such that the relevancy rank of each passage in the subset satisfies a relevancy criterion. A response to the query is caused to be generated using information in the subset of the passages. The response to the query specifies a mitigating factor that mitigates the domain-specific issue. The response to the query is presented to the second user via a user interface.

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter. Moreover, it is noted that the invention is not limited to the specific embodiments described in the Detailed Description and/or other sections of this document. Such embodiments are presented herein for illustrative purposes only. Additional embodiments will be apparent to persons skilled in the relevant art(s) based on the teachings contained herein.

### BRIEF DESCRIPTION OF THE DRAWINGS/FIGURES

The accompanying drawings, which are incorporated herein and form part of the specification, illustrate embodiments of the present invention and, together with the description, further serve to explain the principles involved and to enable a person skilled in the relevant art(s) to make and use the disclosed technologies.
FIG. 1 is a block diagram of an example real-time domain-specific issue system in accordance with an embodiment.
FIGS. 2A-2B depict respective portions of a flowchart of an example method for performing real-time domain-specific issue detection and response generation using artificial intelligence (AI) in accordance with an embodiment.
FIGS. 3-4 depict flowcharts of example methods for performing real-time domain-specific issue detection and response generation using AI in accordance with embodiments.
FIG. 5 is a block diagram of an example computing system in accordance with an embodiment.
FIG. 6 is a system diagram of an example mobile device in accordance with an embodiment.
FIG. 7 depicts an example computer in which embodiments may be implemented.

The features and advantages of the disclosed technologies will become more apparent from the detailed description set forth below when taken in conjunction with the drawings, in which like reference characters identify corresponding elements throughout. In the drawings, like reference numbers generally indicate identical, functionally similar, and/or structurally similar elements. The drawing in which an element first appears is indicated by the leftmost digit(s) in the corresponding reference number.

### DETAILED DESCRIPTION

### I. Example Embodiments

It may be desirable to use one or more artificial intelligence (AI) models to detect a domain-specific issue and to generate a response regarding the domain-specific issue in real-time (e.g., on the fly or on the spot) during a domain-specific conversation. An AI model is a model that utilizes artificial intelligence to generate an answer that is responsive to an AI prompt (a.k.a. prompt) that is received by the AI model. The AI model may be an artificial general intelligence model. An artificial general intelligence model is an AI model (e.g., an autonomous AI model) that is configured to be capable of performing any task that an animal (e.g., a human) is capable of performing. In an example implementation, the artificial general intelligence model is capable of performing a task that surpasses the capabilities of an animal.

Artificial intelligence is intelligence of a machine (e.g., a computing system) and/or code (e.g., software and/or firmware), as opposed to intelligence of an animal (e.g., a human). An AI prompt indicates (e.g., specifies) a task that is to be performed by an AI model. Examples of an AI prompt include but are not limited to a zero-shot prompt, a one-shot prompt, and a few-shot prompt. A zero-shot prompt is a prompt for which the prompt and/or its corresponding contextual information, which are to be processed by the AI model, is not included in pre-trained knowledge of the AI model. The pre-trained knowledge of the AI model is knowledge that is obtained by the AI model prior to the AI model receiving the prompt. For instance, the pre-trained knowledge of the AI model may be obtained from data (e.g., documents) uploaded by a user (e.g., a domain expert, a customer, or an administrator) or obtained from open source(s). A one-shot prompt is a prompt that includes a target prompt along with a single example prompt and a single example answer that is responsive to the single example prompt. The example prompt and the example answer provide guidance as to how the AI model is expected to respond to the target prompt. A few-shot prompt is a prompt that includes a target prompt along with multiple example prompts and multiple example answers that are responsive to the respective example prompts. The example prompts and the example answers provide guidance as to how the AI model is expected to respond to the target prompt.

An AI prompt may be a natural language prompt. A natural language prompt is a prompt that is written in a natural language. A natural language is a human language that has developed through use and repetition. For instance, the natural language may have developed naturally without conscious planning or premeditation. Examples of a natural language include English, French, Spanish, and Mandarin.

In an example implementation, AI model(s) are trained using domain-specific data to detect a domain-specific issue and to generate a response regarding the domain-specific issue in real-time during a domain-specific conversation. In another example implementation, AI prompt(s) that are submitted to the AI model(s) include domain-specific examples that are usable by the AI model(s) to detect the domain-specific issue and to generate the response. By training the AI model(s) using the domain-specific data and/or including the domain-specific examples in the AI prompt(s), the domain-specific issue may be detected more accurately, precisely, and/or reliably, and a likelihood of the response mitigating the domain-specific issue may be increased. For instance, training the AI model(s) using the domain-specific data and/or including the domain-specific examples in the AI prompt(s) may enable the AI model(s) to detect a domain-specific negative sentiment from a domain-specific dialog that represents the domain-specific conversation, convert the domain-specific negative sentiment to a query that describes the domain-specific issue, rank passages from domain-specific documents based on (e.g., based at least on) relevancy to the domain-specific issue, and generate the response from a subset of the passages that is most relevant to mitigating the domain-specific issue.

Example embodiments described herein are capable of using AI to perform real-time domain-specific issue detection and response generation. In an example approach, a domain sentiment AI model is caused to detect a domain-specific negative sentiment, which is associated with a designated domain, in a statement of a first user, which is included in a domain-specific dialog that represents a domain-specific conversation between the first user and a second user, in real-time during the domain-specific conversation by providing a sentiment AI prompt together with at least a portion of the domain-specific dialog as inputs to the domain sentiment AI model. The sentiment AI prompt requests that the domain sentiment AI model determine whether the domain-specific dialog includes the domain-specific negative sentiment. The portion of the domain-specific dialog comprises context regarding the sentiment AI prompt. A response to the sentiment AI prompt is received from the domain sentiment AI model. The response to the sentiment AI prompt comprises an indication of the domain-specific negative sentiment. The indication of the domain-specific negative sentiment is caused to be converted into a query that describes a domain-specific issue. A passage ranking AI model is caused to rank passages, which are included in domain-specific documents, to provide relevancy ranks, which represent relevancies of the passages with regard to mitigation of the domain-specific issue, by providing a ranking AI prompt together with the passages and the query as inputs to the passage ranking AI model. The ranking AI prompt requests that the passage ranking AI model rank the passages based on relevancy to the mitigation of the domain-specific issue. The passages and the query comprise context regarding the ranking AI prompt. A response to the ranking AI prompt is received from the passage ranking AI model. The response to the ranking AI prompt comprises an indication of the relevancy ranks of the passages. A subset of the passages is identified such that the relevancy rank of each passage in the subset satisfies a relevancy criterion. A response to the query is caused to be generated using information in the subset of the passages. The response to the query specifies a mitigating factor that mitigates the domain-specific issue. The response to the query is presented to the second user via a user interface.

Example techniques described herein have a variety of benefits as compared to conventional techniques for detecting a domain-specific issue and generating a response regarding the domain-specific issue. For instance, the example techniques are capable of using AI to detect a domain-specific issue and to generate a response regarding the domain-specific issue in real-time during a domain-specific conversation. The example techniques are also capable of causing citations to passages, which are used to generate the response, to be generated. For instance, AI may be used to select the passages from domain-specific documents based on relevancy of the passages to mitigation of the domain-specific issue. By using AI (e.g., in a domain-specific manner), the example techniques may be capable of detecting the domain-specific issue more quickly, accurately, precisely, and/or reliably than conventional techniques. For instance, the example techniques may reduce a number of false positives in which a general (i.e., non-domain-specific) negative sentiment is inaccurately correlated with a domain-specific issue and/or increase a number of true positives in which a domain-specific negative sentiment is accurately correlated with a domain-specific issue.

By detecting a domain-specific issue and generating a response regarding the domain-specific issue in real-time during a domain-specific conversation, the example techniques may increase a user experience of a user who provides the statement in which a domain-specific negative sentiment associated with the domain-specific issue is detected and/or may increase a user experience of a user who is tasked with providing the response regarding the domain-specific issue. For example, generation of the response using AI may enable the user who is tasked with providing the response to timely inform the user who provides the statement of mitigating information regarding the domain-specific issue and may enable the user who provides the statement to be timely receive such mitigating information. The user experience of the aforementioned users may be increased in other ways, for example, through generation of citations to passages that are used to generate the response. The example techniques may increase an efficiency of the user who provides the statement by reducing the amount of time that the user who provides the statement otherwise would have consumed to mitigate the domain-specific issue. The example techniques may increase an efficiency of the user who is tasked with providing the response regarding the domain-specific issue by reducing the amount of time that the user who is tasked with providing the response otherwise would have consumed to identify a mitigating factor that mitigates the domain-specific issue and/or to generate the response, which specifies the mitigating factor.

The example techniques may reduce an amount of time and/or resources (e.g., processor cycles, memory, network bandwidth) that is consumed to detect a domain-specific issue and/or to generate a response regarding the domain-specific issue. For instance, by using AI to detect the domain-specific issue and to generate the response in real-time during a domain-specific conversation, the amount of time and resources that otherwise would have been consumed to perform such tasks manually may be avoided. Accordingly, using AI enables detection of the domain-specific issue and generation of the response to be automated. Automating the detection of the domain-specific issue and the generation of the response may reduce a cost associated with performing such tasks. By reducing the amount of time and/or resources that is consumed by a computing system to detect the domain-specific issue and to generate the response, the efficiency of the computing system may be increased.

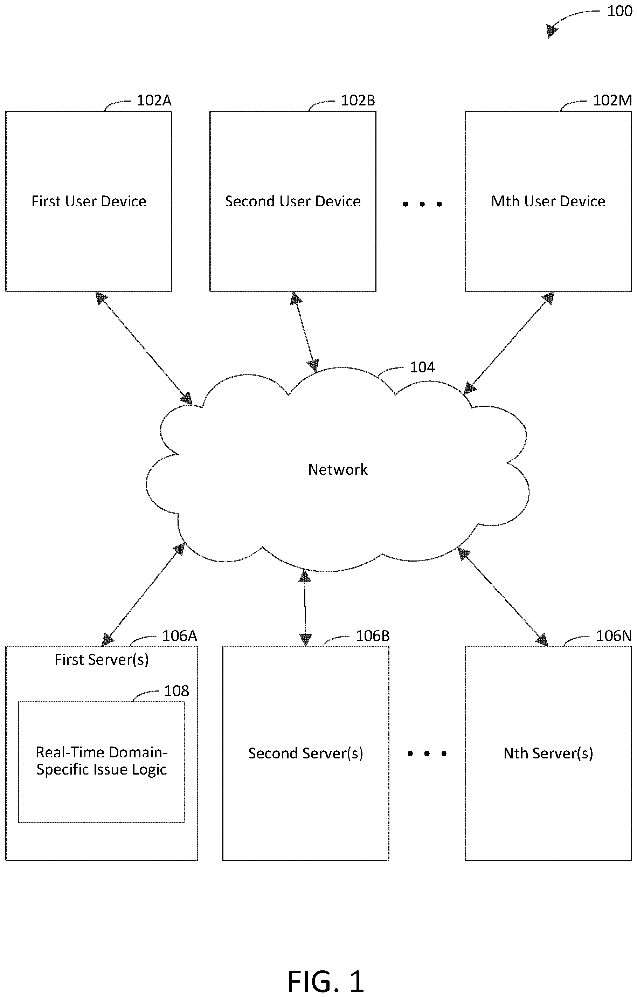

FIG. 1 is a block diagram of an example real-time domain-specific issue system 100 in accordance with an embodiment. Generally speaking, the real-time domain-specific issue system 100 operates to provide information to users in response to requests (e.g., hypertext transfer protocol (HTTP) requests) that are received from the users. The information may include documents (Web pages, images, audio files, video files, etc.), output of executables, and/or any other suitable type of information. In accordance with example embodiments described herein, the real-time domain-specific issue system 100 uses AI to perform real-time domain-specific issue detection and response generation. Detail regarding techniques for using AI to perform real-time domain-specific issue detection and response generation is provided in the following discussion.

As shown in FIG. 1, the real-time domain-specific issue system 100 includes a plurality of user devices 102A-102M, a network 104, and a plurality of servers 106A-106N. Communication among the user devices 102A-102M and the servers 106A-106N is carried out over the network 104 using well-known network communication protocols. The network 104 may be a wide-area network (e.g., the Internet), a local area network (LAN), another type of network, or a combination thereof.

The user devices 102A-102M are computing systems that are capable of communicating with servers 106A-106N. A computing system is a system that includes at least a portion of a processor system such that the portion of the processor system includes at least one processor that is capable of manipulating data in accordance with a set of instructions. A processor system includes one or more processors, which may be on a same (e.g., single) device or distributed among multiple (e.g., separate) devices. For instance, a computing system may be a computer, a personal digital assistant, etc. The user devices 102A-102M are configured to provide requests to the servers 106A-106N for requesting information stored on (or otherwise accessible via) the servers 106A-106N. For instance, a user may initiate a request for executing a computer program (e.g., an application) using a client (e.g., a Web browser, Web crawler, or other type of client) deployed on a user device 102 that is owned by or otherwise accessible to the user. In accordance with some example embodiments, the user devices 102A-102M are capable of accessing domains (e.g., Web sites) hosted by the servers 104A-104N, so that the user devices 102A-102M may access information that is available via the domains. Such domain may include Web pages, which may be provided as hypertext markup language (HTML) documents and objects (e.g., files) that are linked therein, for example.

Each of the user devices 102A-102M may include any client-enabled system or device, including but not limited to a desktop computer, a laptop computer, a tablet computer, a wearable computer such as a smart watch or a head-mounted computer, a personal digital assistant, a cellular telephone, an Internet of things (IoT) device, or the like. It will be recognized that any one or more of the user devices 102A-102M may communicate with any one or more of the servers 106A-106N.

The servers 106A-106N are computing systems that are capable of communicating with the user devices 102A-102M. The servers 106A-106N are configured to execute computer programs that provide information to users in response to receiving requests from the users. For example, the information may include documents (Web pages, images, audio files, video files, etc.), output of executables, or any other suitable type of information. In accordance with some example embodiments, the servers 106A-106N are configured to host respective Web sites, so that the Web sites are accessible to users of the real-time domain-specific issue system 100.

One example type of computer program that may be executed by one or more of the servers 106A-106N is an AI assistant. An AI assistant is a computer program that is configured to use AI to interact with a user of a device. For instance, the AI assistant may use the AI to answer questions that are asked by the user or to perform tasks based on instructions from the user. Examples of an AI assistant include but are not limited to a watsonx^{®} AI assistant, developed and distributed by International Business Machines (IBM) Corporation; a Now^{®} AI assistant, developed and distributed by SerivceNow, Inc.; an Einstein Copilot^{™} AI assistant, developed and distributed by Salesforce.com, Inc.; a Microsoft^{®} Copilot^{™} AI assistant, developed and distributed by Microsoft Corporation; an Oracle^{®} Digital Assistant^{™} AI assistant; an Amazon Lex^{®} AI assistant, developed and distributed by Amazon Technologies, Inc.; and a Siri^{®} AI assistant, developed and distributed by Apple Inc. It will be recognized that an AI assistant may incorporate chatbot functionality, which simulates human conversation. It will be further recognized that the example techniques described herein may be implemented using an AI assistant. For instance, a software product (e.g., a subscription service, a non-subscription service, or a combination thereof) may include the AI assistant, and the software product may be configured to perform the example techniques, though the scope of the example embodiments is not limited in this respect.

An AI assistant may be incorporated into a cloud computing program (a.k.a. a cloud service). A cloud computing program is a computer program that provides hosted service(s) via a network (e.g., network 104). For instance, the hosted service(s) may be hosted by any one or more of the servers 106A-106N. The cloud computing program may enable users (e.g., at any of the user systems 102A-102M) to access shared resources that are stored on or are otherwise accessible to the server(s) via the network.

The cloud computing program may provide hosted service(s) according to any of a variety of service models, including but not limited to Backend as a Service (BaaS), Software as a Service (SaaS), Platform as a Service (PaaS), and Infrastructure as a Service (IaaS). BaaS enables applications (e.g., software programs) to use a BaaS provider's backend services (e.g., push notifications, integration with social networks, and cloud storage) running on a cloud infrastructure. SaaS enables a user to use a SaaS provider's applications running on a cloud infrastructure. PaaS enables a user to develop and run applications using a PaaS provider's application development environment (e.g., operating system, programming-language execution environment, database) on a cloud infrastructure. IaaS enables a user to use an IaaS provider's computer infrastructure (e.g., to support an enterprise). For example, IaaS may provide to the user virtualized computing resources that utilize the IaaS provider's physical computer resources.

Examples of a cloud computing program include but are not limited to a Google Cloud^{®} program developed and distributed by Google Inc.; an Oracle Cloud^{®} program developed and distributed by Oracle Corporation; an Amazon Web Services^{®} program developed and distributed by Amazon.com, Inc.; a Salesforce^{®} program developed and distributed by Salesforce.com, Inc.; an AppSource^{®} program developed and distributed by Microsoft Corporation; an Azure^{®} program developed and distributed by Microsoft Corporation; a GoDaddy^{®} program developed and distributed by GoDaddy.com LLC; and a Rackspace^{®} program developed and distributed by Rackspace US, Inc. It will be recognized that the example techniques described herein may be implemented using a cloud computing program. For instance, a software product (e.g., a subscription service, a non-subscription service, or a combination thereof) may include the cloud computing program, and the software product may be configured to perform the example techniques, though the scope of the example embodiments is not limited in this respect.

The first server(s) 106A are shown to include real-time domain-specific issue logic 108 for illustrative purposes. The real-time domain-specific issue logic 108 is configured to use AI to perform real-time domain-specific issue detection and response generation. In an example implementation, the real-time domain-specific issue logic 108 causes a domain sentiment AI model to detect a domain-specific negative sentiment, which is associated with a designated domain, in a statement of a first user, which is included in a domain-specific dialog that represents a domain-specific conversation between the first user and a second user, in real-time during the domain-specific conversation by providing a sentiment AI prompt together with at least a portion of the domain-specific dialog as inputs to the domain sentiment AI model. The sentiment AI prompt requests that the domain sentiment AI model determine whether the domain-specific dialog includes the domain-specific negative sentiment. The portion of the domain-specific dialog comprises context regarding the sentiment AI prompt. The real-time domain-specific issue logic 108 receives a response to the sentiment AI prompt from the domain sentiment AI model. The response to the sentiment AI prompt comprises an indication of the domain-specific negative sentiment. The real-time domain-specific issue logic 108 causes the indication of the domain-specific negative sentiment to be converted into a query that describes a domain-specific issue. The real-time domain-specific issue logic 108 causes a passage ranking AI model to rank passages, which are included in domain-specific documents, to provide relevancy ranks, which represent relevancies of the passages with regard to mitigation of the domain-specific issue, by providing a ranking AI prompt together with the passages and the query as inputs to the passage ranking AI model. The ranking AI prompt requests that the passage ranking AI model rank the passages based on relevancy to the mitigation of the domain-specific issue. The passages and the query comprise context regarding the ranking AI prompt. The real-time domain-specific issue logic 108 receives a response to the ranking AI prompt from the passage ranking AI model. The response to the ranking AI prompt comprises an indication of the relevancy ranks of the passages. The real-time domain-specific issue logic 108 identifies a subset of the passages such that the relevancy rank of each passage in the subset satisfies a relevancy criterion. The real-time domain-specific issue logic 108 causes a response to the query to be generated using information in the subset of the passages. The response to the query specifies a mitigating factor that mitigates the domain-specific issue. The real-time domain-specific issue logic 108 presents the response to the query to the second user via a user interface.

The real-time domain-specific issue logic 108 may be implemented in various ways to use AI to perform real-time domain-specific issue detection and response generation, including being implemented in hardware, software, firmware, or any combination thereof. For example, the real-time domain-specific issue logic 108 may be implemented as computer program code configured to be executed in one or more processors. In another example, at least a portion of the real-time domain-specific issue logic 108 may be implemented as hardware logic/electrical circuitry. For instance, at least a portion of the real-time domain-specific issue logic 108 may be implemented in a field-programmable gate array (FPGA), an application-specific integrated circuit (ASIC), an application-specific standard product (ASSP), a system-on-a-chip system (SoC), a complex programmable logic device (CPLD), etc. Each SoC may include an integrated circuit chip that includes one or more of a processor (a microcontroller, microprocessor, digital signal processor (DSP), etc.), memory, one or more communication interfaces, and/or further circuits and/or embedded firmware to perform its functions.

It will be recognized that the real-time domain-specific issue logic 108 may be (or may be included in) an AI assistant and/or a cloud computing program, though the scope of the example embodiments is not limited in this respect.

The real-time domain-specific issue logic 108 is shown to be incorporated in the first server(s) 106A for illustrative purposes and is not intended to be limiting. It will be recognized that the real-time domain-specific issue logic 108 (or any portion(s) thereof) may be incorporated in any one or more of the servers 106A-106N, any one or more of the user devices 102A-102M, or any combination thereof. For example, client-side aspects of the real-time domain-specific issue logic 108 may be incorporated in one or more of the user devices 102A-102M, and server-side aspects of real-time domain-specific issue logic 108 may be incorporated in one or more of the servers 106A-106N.

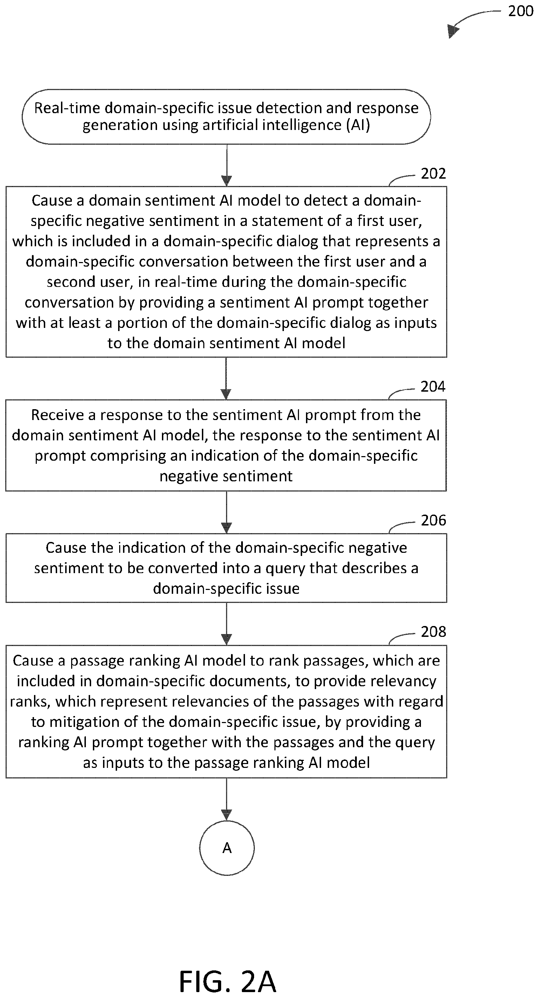

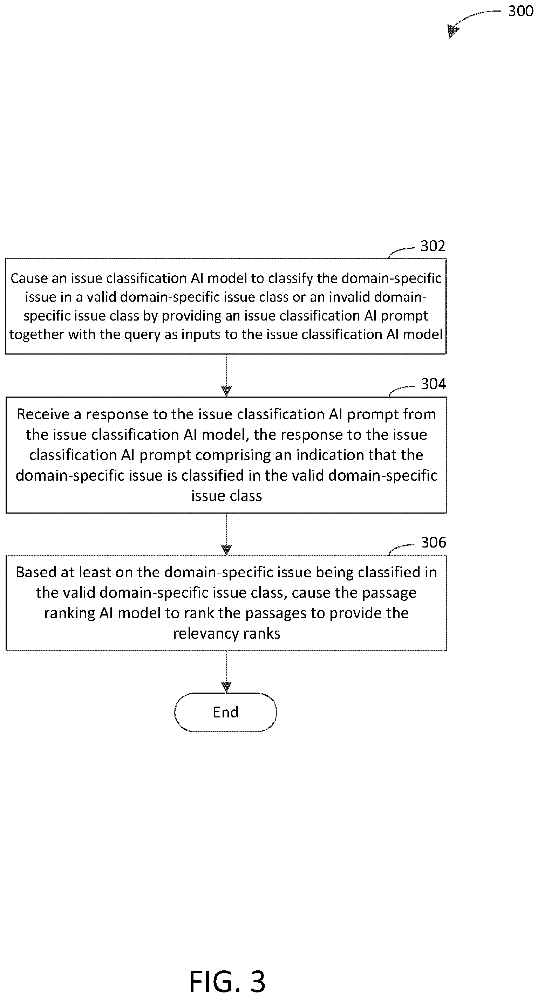

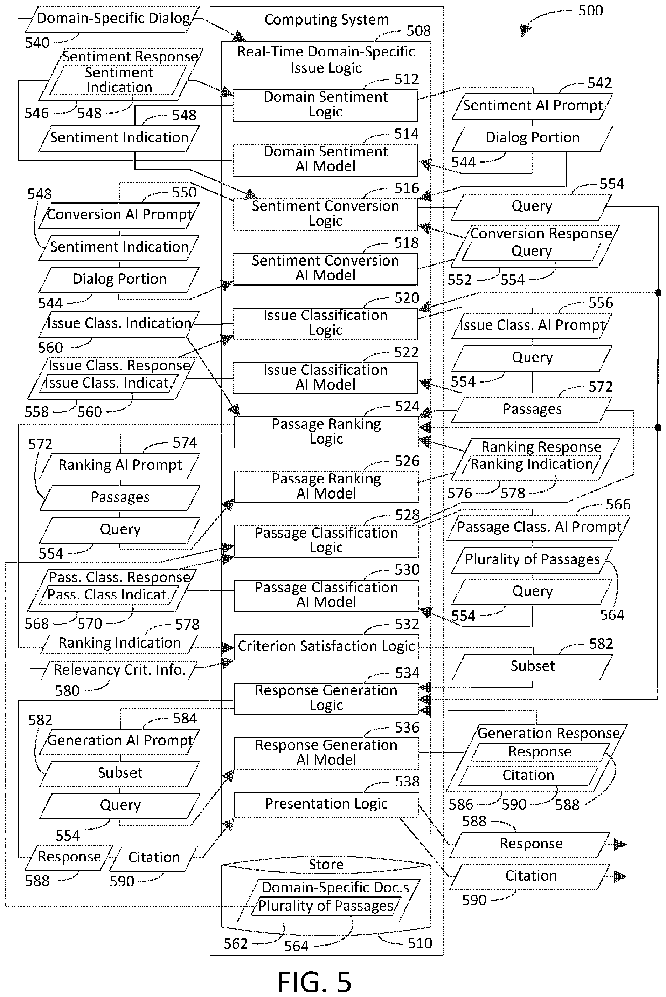

FIGS. 2A-2B depict respective portions of a flowchart 200 of an example method for performing real-time domain-specific issue detection and response generation using artificial intelligence (AI) in accordance with an embodiment. FIGS. 3-4 depict flowcharts 300 and 400 of example methods for performing real-time domain-specific issue detection and response generation using AI in accordance with embodiments. Flowcharts 200, 300, and 400 may be performed by the first server(s) 106A shown in FIG. 1, for example. For illustrative purposes, flowcharts 200, 300, and 400 are described with respect to a computing system 500 shown in FIG. 5, which is an example implementation of the first server(s) 106A. As shown in FIG. 5, the computing system 500 includes real-time domain-specific issue logic 508 and a store 510. The real-time domain-specific issue logic 508 includes domain sentiment logic 512, a domain sentiment AI model 514, sentiment conversion logic 516, a sentiment conversion AI model 518, issue classification logic 520, an issue classification AI model 522, passage ranking logic 524, a passage ranking AI model 526, passage classification logic 528, a passage classification AI model 530, criterion satisfaction logic 532, response generation logic 534, a response generation AI model 536, and presentation logic 538. The store 510 may be any suitable type of store. One type of store is a database. For instance, the store 510 may be a relational database, an entity-relationship database, an object database, an object relational database, an extensible markup language (XML) database, etc. The store 510 is shown to store domain-specific documents 562 for nonlimiting, illustrative purposes. The domain-specific documents 562 include a plurality of passages 564. Further structural and operational embodiments will be apparent to persons skilled in the relevant art(s) based on the discussion regarding flowcharts 200, 300, and 400.

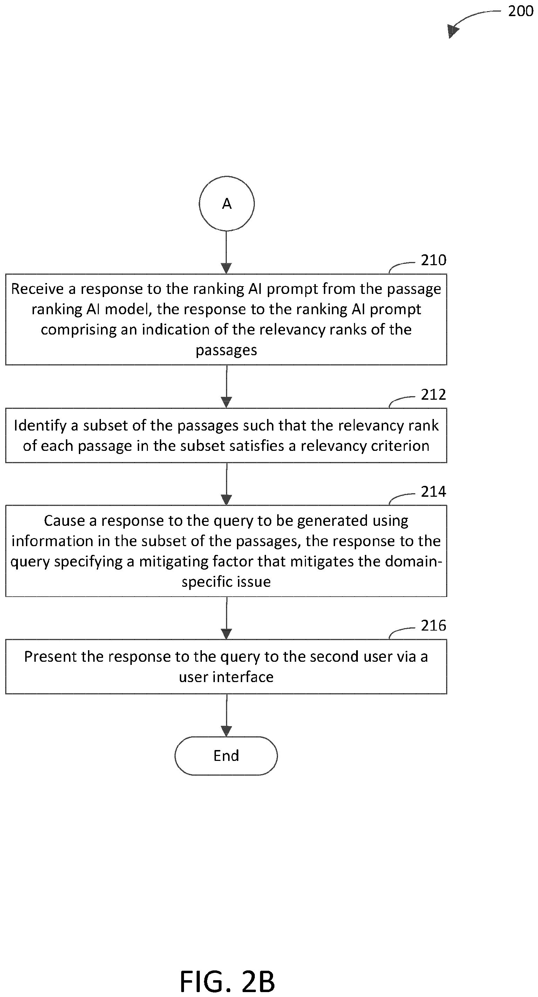

As shown in FIG. 2, the method of flowchart 200 begins at step 202. In step 202, a domain sentiment AI model is caused to detect a domain-specific negative sentiment, which is associated with a designated domain, in a statement of a first user, which is included in a domain-specific dialog that represents a domain-specific conversation between the first user and a second user, in real-time during the domain-specific conversation by providing a sentiment AI prompt together with at least a portion of the domain-specific dialog as inputs to the domain sentiment AI model. For instance, the domain sentiment AI model may be caused to distinguish the domain-specific negative sentiment from a non-domain-specific negative sentiment, such as a generalized sentiment that is not associated with the designated domain. Statements in the domain-specific dialog (e.g., the statement of the first user) need not necessarily have a particular grammatical structure. Accordingly, in an aspect, the grammatical structure of the statements is not pre-defined. The sentiment AI prompt requests that the domain sentiment AI model determine whether the domain-specific dialog includes the domain-specific negative sentiment. The portion of the domain-specific dialog comprises context regarding the sentiment AI prompt. The domain sentiment AI model may detect the domain-specific negative sentiment based on any suitable factors, including but not limited to keyword(s) in the statement of the first user and a topic of the domain-specific dialog that is indicated by the statement.

In an example implementation, the domain sentiment logic 512 causes the domain sentiment AI model 514 to detect the domain-specific negative sentiment in the statement of the first user, which is included in a domain-specific dialog 540 that represents the domain-specific conversation, in real-time during the domain-specific conversation by providing a sentiment AI prompt 542 together with at least a dialog portion 544, which is a portion of the domain-specific dialog 540, as inputs to the domain sentiment AI model 514. The sentiment AI prompt 542 requests that the domain sentiment AI model 514 determine whether the domain-specific dialog 540 includes the domain-specific negative sentiment. The dialog portion 544 comprises context regarding the sentiment AI prompt 542. It can be said that the domain sentiment logic 512 detects the domain-specific negative sentiment in the statement of the first user using the domain sentiment AI model 514. Accordingly, causing the domain sentiment AI model to detect the domain-specific negative sentiment at step 202 may include detecting the domain-specific negative sentiment using the domain sentiment AI model.

In an example embodiment, the domain sentiment logic 512 causes the domain sentiment AI model 514 to analyze (e.g., develop and/or refine an understanding of) the sentiment AI prompt 542, the dialog portion 544 (including statements therein, such as the statement of the first user), relationships between any of the foregoing, and confidences in those relationships. For example, the domain sentiment logic 512 may cause the domain sentiment AI model 514 to compare attributes of the sentiment AI prompt 542, the dialog portion 544, and other contextual information (which may include sample AI prompt(s) and sample dialog portions) using artificial intelligence to determine whether the statement of the first user includes the domain-specific negative sentiment.

In some example embodiments, the domain sentiment AI model 514 includes a neural network that uses the artificial intelligence to determine (e.g., predict) relationships between the sentiment AI prompt 542, the dialog portion 544, and the other contextual information and confidences in the relationships. The neural network uses those relationships to determine whether the statement of the first user includes the domain-specific negative sentiment. For example, attributes of the sentiment AI prompt 542 and the dialog portion 544 (and potentially example AI prompt(s) and example dialog portions) may be compared to determine similarities and differences between those attributes. In accordance with this example, the neural network may use those similarities and differences to determine whether the statement of the first user includes the domain-specific negative sentiment.

Examples of a neural network include but are not limited to a feed forward neural network and a transformer-based neural network. A feed forward neural network is an artificial neural network for which connections between units in the neural network do not form a cycle. The feed forward neural network allows data to flow forward (e.g., from the input nodes toward to the output nodes), but the feed forward neural network does not allow data to flow backward (e.g., from the output nodes toward to the input nodes). In an example embodiment, the domain sentiment logic 512 employs a feed forward neural network to train the domain sentiment AI model 514, which is used to determine AI-based confidences. Such AI-based confidences may be used to determine likelihoods that events will occur.

A transformer-based neural network is a neural network that incorporates a transformer. A transformer is a deep learning model that utilizes attention to differentially weight the significance of each portion of sequential input data, such as natural language. Attention is a technique that mimics cognitive attention. Cognitive attention is a behavioral and cognitive process of selectively concentrating on a discrete aspect of information while ignoring other perceivable aspects of the information. Accordingly, the transformer uses the attention to enhance some portions of the input data while diminishing other portions. The transformer determines which portions of the input data to enhance and which portions of the input data to diminish based on the context of each portion. For instance, the transformer may be trained to identify the context of each portion using any suitable technique, such as gradient descent.

In an example embodiment, the transformer-based neural network generates a domain-specific negative sentiment model (e.g., to detect domain-specific negative sentiments in statements that are included in domain-specific dialogs) by utilizing information, such as AI prompts (e.g., the sentiment AI prompt 542), dialog portions (e.g., dialog portion 544), relationships between any of the foregoing, and AI-based confidences that are derived therefrom.

In example embodiments, the sentiment AI prompt 542 includes training logic, and the domain sentiment AI model 514 includes inference logic. The training logic is configured to train an AI algorithm that the inference logic uses to determine (e.g., infer) the AI-based confidences. For instance, the training logic may provide sample AI prompts and sample contextual information (e.g., dialog portions) as inputs to the AI algorithm to train the AI algorithm. The sample data may be labeled. The AI algorithm may be configured to derive relationships between the features (e.g., the sentiment AI prompt 542 and the dialog portion 544) and the resulting AI-based confidences. The inference logic is configured to utilize the AI algorithm, which is trained by the training logic, to determine the AI-based confidence when the features are provided as inputs to the algorithm.

In an example embodiment, the domain sentiment AI model is a domain-specific model. For instance, the domain-specific model may be trained exclusively on domain-specific data. In a first aspect of this embodiment, the domain is "sales." In accordance with this aspect, the statement of the first user is "I need to get approval from my boss before I can sign anything." In further accordance with this aspect, the domain-specific model detects the sentiment of the statement to be a domain-specific negative sentiment, whereas a general AI model likely would identify the sentiment as neutral. In a second aspect of this embodiment, the domain is "education." In accordance with this aspect, the statement of the first user is "This new material makes no sense to me." In further accordance with this aspect, the domain-specific model detects the sentiment of the statement to be a domain-specific negative sentiment, whereas a general AI model likely would identify the sentiment as neutral. In a third aspect of this embodiment, the domain is "finance." In accordance with this aspect, the statement of the first user is "The other bank offered me lower interest rates." In further accordance with this aspect, the domain-specific model detects the sentiment of the statement to be a domain-specific negative sentiment, whereas a general AI model likely would identify the sentiment as positive.

In an example embodiment, the domain sentiment AI model is caused to detect the domain-specific negative sentiment in the statement of the first user based at least on (e.g., in response to or as a result of) a tone of the first user that is indicated by the statement (e.g., in context of other statements that are included in the domain-specific dialog).

At step 204, a response to the sentiment AI prompt is received from the domain sentiment AI model. The response to the sentiment AI prompt comprises an indication of the domain-specific negative sentiment. In an example implementation, the domain sentiment logic 512 receives a sentiment response 546, which is a response to the sentiment AI prompt 542, from the domain sentiment AI model 514. The sentiment response 546 comprises a sentiment indication 548, which is an indication of the domain-specific negative sentiment.

At step 206, the indication of the domain-specific negative sentiment is caused to be converted into a query that describes a domain-specific issue. In an aspect, the indication of the domain-specific negative sentiment is caused to be converted into the query using rules (e.g., custom conversion rules) that are specific to the designated domain. In an example implementation, the sentiment conversion logic 516 causes the sentiment indication 548 to be converted into a query 554 that describes the domain-specific issue.

At step 208, a passage ranking AI model is caused to rank passages, which are included in domain-specific documents, to provide (e.g., resulting in) relevancy ranks, which represent relevancies of the passages with regard to mitigation of the domain-specific issue, by providing a ranking AI prompt together with the passages and the query as inputs to the passage ranking AI model. The ranking AI prompt requests that the passage ranking AI model rank the passages based on relevancy to the mitigation of the domain-specific issue. The passages and the query comprise context regarding the ranking AI prompt. The passages may be ranked based on any suitable factors, including but not limited to content of the passages, metadata of the passages, relations of the passages to the domain-specific issue, a context of the domain-specific conversation, and weights assigned to any of the forgoing factors. For instance, metadata of a passage may indicate a topic with which the passage is associated, a date on which the passage was created, a date on which the passage was stored, a type of document that includes the passage, and so on. In an aspect, a relevancy rank of "one" (i.e., the highest relevancy rank) represents the highest relevancy; a relevancy rank of "two" (i.e., the next highest relevancy rank) represents the next-highest relevancy, and so on. Mitigation of the domain-specific issue may include resolving the domain-specific issue or reducing a negative effect of the domain-specific issue. In an example implementation, passage ranking logic 524 causes the passage ranking AI model 526 to rank passages 572, which are included in the domain-specific documents 562 that are stored in the store 510, to provide a ranking indication 578, which indicates relevancy ranks that represent relevancies of the passages 572 with regard to mitigation of the domain-specific issue, by providing a ranking AI prompt 574 together with the passages 572 and the query 554 as inputs to the passage ranking AI model 526. The ranking AI prompt 574 requests that the passage ranking AI model 526 rank the passages 572 based on relevancy to the mitigation of the domain-specific issue. The passages 572 and the query 554 comprise context regarding the ranking AI prompt 574. It can be said that the passage ranking logic 524 ranks the passages 572 using the passage ranking AI model 526. Accordingly, causing the passage ranking AI model to rank the passages at step 208 may include ranking the passages using the passage ranking AI model. Upon completion of step 208, flow continues at step 210 shown in FIG. 2B.

In an example embodiment, the passage ranking logic 524 causes the passage ranking AI model 526 to analyze (e.g., develop and/or refine an understanding of) the ranking AI prompt 574, the passages 572, and the query 554, relationships between any of the foregoing, and confidences in those relationships. For example, the passage ranking logic 524 may cause the passage ranking AI model 526 to compare attributes of the ranking AI prompt 574, the passages 572, the query 554, and other contextual information (which may include sample AI prompt(s), sample passages, and sample queries) using artificial intelligence to rank the passages 572 to provide the ranking indication 578.

In some example embodiments, the passage ranking AI model 526 includes a neural network that uses the artificial intelligence to determine (e.g., predict) relationships between the ranking AI prompt 574, the passages 572, the query 554, and the other contextual information and confidences in the relationships. The neural network uses those relationships to rank the passages 572 to provide the ranking indication 578. For example, attributes of the ranking AI prompt 574, the passages 572, and the query 554 (and potentially example AI prompt(s), example passages, and example queries) may be compared to determine similarities and differences between those attributes. In accordance with this example, the neural network may use those similarities and differences to rank the passages 572 to provide the ranking indication 578.

In an example embodiment, the passage ranking logic 524 employs a feed forward neural network to train the passage ranking AI model 526, which is used to determine AI-based confidences. Such AI-based confidences may be used to determine likelihoods that events will occur.

In another example embodiment, the passage ranking logic 524 employs a transformer-based neural network that generates a passage ranking model (e.g., to rank passages in domain-specific documents to provide relevancy rankings for the respective passages) by utilizing information, such as AI prompts (e.g., the ranking AI prompt 574), passages (e.g., passages 572), queries (e.g., query 554), relationships between any of the foregoing, and AI-based confidences that are derived therefrom.

In example embodiments, the ranking AI prompt 574 includes training logic, and the passage ranking AI model 526 includes inference logic. For instance, the training logic may provide sample AI prompts and sample contextual information (e.g., passages and queries) as inputs to the AI algorithm to train the AI algorithm. The sample data may be labeled. The AI algorithm may be configured to derive relationships between the features (e.g., the ranking AI prompt 574, the passages 572, and the query 554) and the resulting AI-based confidences. The inference logic is configured to utilize the AI algorithm, which is trained by the training logic, to determine the AI-based confidence when the features are provided as inputs to the algorithm.

At step 210, a response to the ranking AI prompt is received from the passage ranking AI model. The response to the ranking AI prompt comprises an indication of the relevancy ranks of the passages. In an example implementation, the passage ranking logic 524 receives a ranking response 576, which is a response to the ranking AI prompt 574, from the passage ranking AI model 526. The ranking response 576 comprises the ranking indication 578, which indicates the relevancy ranks that represent the relevancies of the passages 572 with regard to the mitigation of the domain-specific issue.

At step 212, a subset of the passages is identified such that the relevancy rank of each passage in the subset satisfies a relevancy criterion. In an aspect, the relevancy criterion requires the relevancy rank of each passage in the subset to be greater than or equal to a relevancy threshold. In accordance with this aspect, the relevancy threshold being equal to five would indicate that the subset is defined to include the passages having the top five highest relevancy ranks (i.e., the passages having the relevancy ranks of one, two, three, four, and five). In further accordance with this aspect, the relevancy threshold being equal to ten would indicate that the subset is defined to include the passages having the top ten highest relevancy ranks. In an example implementation, the criterion satisfaction logic 532 identifies a subset 582 of the passages 572 such that the relevancy rank of each passage in the subset 582 satisfies the relevancy criterion, which is indicated by relevancy criterion information 580. In an aspect of this implementation, the criterion satisfaction logic 532 analyzes the ranking indication 578 to identify the relevancy ranks that represent the relevancies of the passages 572 with regard to the mitigation of the domain-specific issue. In accordance with this aspect, the criterion satisfaction logic 532 analyzes the relevancy criterion information 580 to identify the relevancy criterion. In further accordance with this aspect, the criterion satisfaction logic 532 compares the relevancy ranks, as indicated by the ranking indication 578, and the relevancy criterion, as indicated by the relevancy criterion information 580, to identify the subset 582 of the passages 572.

At step 214, a response to the query is caused to be generated using information in the subset of the passages. The response to the query specifies a mitigating factor that mitigates (e.g., resolves or reduces a negative effect of) the domain-specific issue. In an aspect, the response to the query includes an answer to the query. In another aspect, the response to the query includes a counterargument regarding the statement. In an example implementation, the response generation logic 534 causes a response 588 to the query 554 to be generated using information in the subset 582 of the passages 572. The response 588 to the query 554 specifies the mitigating factor that mitigates the domain-specific issue.

In an example embodiment, causing the response to the query to be generated at step 214 includes causing a response generation AI model to generate the response to the query by providing a generation AI prompt together with the subset of the passages and the query as inputs to the response generation AI model. The generation AI prompt requests that the response generation AI model generate the response to the query. The subset of the passages and the query comprise context regarding the generation AI prompt. In an example, implementation, the response generation logic 534 causes the response generation AI model 536 to generate a response 588 to the query 554 by providing a generation AI prompt 584 together with the subset 582 of the passages 572 and the query 554 as inputs to the response generation AI model 536. The generation AI prompt 584 requests that the response generation AI model 536 generate the response 588 to the query 554. The subset 582 of the passages 572 and the query 554 comprise context regarding the generation AI prompt 584. The response generation AI model 536 generates the generation response 586, which includes the response 588 to the query 554. It can be said that the response generation logic 534 generates the response 588 to the query 554 using the response generation AI model 536. Accordingly, causing the response generation AI model to generate the response to the query may include generating the response to the query using the response generation AI model. In accordance with this embodiment, causing the response to the query to be generated at step 214 further includes receiving a response to the generation AI prompt from the response generation AI model. The response to the generation AI prompt comprises the response to the query. In an example implementation, the response generation logic 534 receives the generation response 586, which is a response to the generation AI prompt 584, from the response generation AI model 536. The generation response 586 comprises the response 588 to the query 554.

In an aspect of this embodiment, the response generation logic 534 causes the response generation AI model 536 to analyze (e.g., develop and/or refine an understanding of) the generation AI prompt 584, the subset 582 of the passages 572, and the query 554, relationships between any of the foregoing, and confidences in those relationships. For example, the response generation logic 534 may cause the response generation AI model 536 to compare attributes of the generation AI prompt 584, the subset 582 of the passages 572, the query 554, and other contextual information (which may include sample AI prompt(s), sample passages, and sample queries) using artificial intelligence to generate the response 588 to the query 554.

In some aspects, the response generation AI model 536 includes a neural network that uses the artificial intelligence to determine (e.g., predict) relationships between the generation AI prompt 584, the subset 582 of the passages 572, the query 554, and the other contextual information and confidences in the relationships. The neural network uses those relationships to generate the response 588 to the query 554. For example, attributes of the generation AI prompt 584, the subset 582 of the passages 572, and the query 554 (and potentially example AI prompt(s), example passages, and example queries) may be compared to determine similarities and differences between those attributes. In accordance with this example, the neural network may use those similarities and differences to generate the response 588 to the query 554.

In an aspect, the response generation logic 534 employs a feed forward neural network to train the response generation AI model 536, which is used to determine AI-based confidences. Such AI-based confidences may be used to determine likelihoods that events will occur.

In another aspect, the response generation logic 534 employs a transformer-based neural network that generates a response model (e.g., to generate responses to queries) by utilizing information, such as AI prompts (e.g., the generation AI prompt 584), passages (e.g., the subset 582 of the passages 572), queries (e.g., query 554), relationships between any of the foregoing, and AI-based confidences that are derived therefrom.

In some aspects, the generation AI prompt 584 includes training logic, and the response generation AI model 536 includes inference logic. For instance, the training logic may provide sample AI prompts and sample contextual information (e.g., passages and queries) as inputs to the AI algorithm to train the AI algorithm. The sample data may be labeled. The AI algorithm may be configured to derive relationships between the features (e.g., the generation AI prompt 584, the subset 582 of the passages 572, and the query 554) and the resulting AI-based confidences. The inference logic is configured to utilize the AI algorithm, which is trained by the training logic, to determine the AI-based confidence when the features are provided as inputs to the algorithm.

In another example embodiment, the response to the query is configured to mimic one or more attributes associated with the second user. In an aspect of this embodiment, the response to the query has a tone that corresponds to a reference tone of the second user. In another aspect of this embodiment, the response to the query has a style that corresponds to a reference style of the second user. In yet another aspect of this embodiment, the response to the query has a personality that corresponds to a reference personality of the second user.

At step 216, the response to the query is presented to the second user via a user interface. For example, step 216 may include triggering presentation of the response to the query to the second user via the user interface. In an example implementation, the presentation logic 538 presents the response 588 to the query 554 to the second user via the user interface.

In an example embodiment, causing the indication of the domain-specific negative sentiment to be converted into the query at step 206 includes causing a sentiment conversion AI model to convert the indication of the domain-specific negative sentiment into the query that describes the domain-specific issue by providing a conversion AI prompt together with the indication of the domain-specific negative sentiment and at least the portion of the domain-specific dialog as inputs to the sentiment conversion AI model. The conversion AI prompt requests that the sentiment conversion AI model convert the indication of the domain-specific negative sentiment into the query. The indication of the domain-specific negative sentiment and at least the portion of the domain-specific dialog comprise context regarding the conversion AI prompt. In an aspect, causing the sentiment conversion AI model to convert the indication of the domain-specific negative sentiment into the query includes causing the sentiment conversion AI model to take into consideration the portion of the domain-specific dialog that precedes the statement of the first user to generate the query. For example, the statement of the first user may be, "This does not make sense." In accordance with this example, the indication of the domain-specific negative sentiment may indicate that "this" is confusing. In further accordance with this example, the portion of the domain-specific dialog that precedes the first user's statement may provide context that enables the sentiment conversion AI model to determine which subject matter is referenced by the term "this" in the first user's statement. In further accordance with this example, the sentiment conversion AI model may replace the term "this" with the name of the subject matter that is referenced by the term "this" when converting the indication of the domain-specific negative sentiment into the query.

In an example implementation, the sentiment conversion logic 516 causes the sentiment conversion AI model 518 to convert the sentiment indication 548 into the query 554 by providing a conversion AI prompt 550 together with the sentiment indication 548 and at least the dialog portion 544 as inputs to the sentiment conversion AI model 518. The conversion AI prompt 550 requests that the sentiment conversion AI model 518 convert the sentiment indication 548 into the query 554. The sentiment indication 548 and at least the dialog portion 544 comprise context regarding the conversion AI prompt 550. It can be said that the sentiment conversion logic 516 converts the sentiment indication 548 into the query 554 using the sentiment conversion AI model 518. Accordingly, causing the sentiment conversion AI model to convert the indication of the domain-specific negative sentiment into the query may include converting the indication of the domain-specific negative sentiment into the query using the sentiment conversion AI model.

In accordance with this embodiment, causing the indication of the domain-specific negative sentiment to be converted into the query at step 206 further includes receiving a response to the conversion AI prompt from the sentiment conversion AI model. The response to the conversion AI prompt comprises the query. In an example implementation, the sentiment conversion logic 516 receives a conversion response 552, which is a response to the conversion AI prompt 550, from the sentiment conversion AI model 518. The conversion response 552 comprises the query 554.

In an aspect of this embodiment, the sentiment conversion logic 516 causes the sentiment conversion AI model 518 to analyze (e.g., develop and/or refine an understanding of) the conversion AI prompt 550, the sentiment indication 548, and the dialog portion 544, relationships between any of the foregoing, and confidences in those relationships. For example, the sentiment conversion logic 516 may cause the sentiment conversion AI model 518 to compare attributes of the conversion AI prompt 550, the sentiment indication 548, the dialog portion 544, and other contextual information (which may include sample AI prompt(s), sample sentiment indications, and sample dialog portions) using artificial intelligence to convert the sentiment indication 548 into the query 554.

In some aspects, the sentiment conversion AI model 518 includes a neural network that uses the artificial intelligence to determine (e.g., predict) relationships between the conversion AI prompt 550, the sentiment indication 548, the dialog portion 544, and the other contextual information and confidences in the relationships. The neural network uses those relationships to convert the sentiment indication 548 into the query 554. For example, attributes of the conversion AI prompt 550, the sentiment indication 548, and the dialog portion 544 (and potentially example AI prompt(s), example sentiment indications, and example dialog portions) may be compared to determine similarities and differences between those attributes. In accordance with this example, the neural network may use those similarities and differences to convert the sentiment indication 548 into the query 554.

In an aspect, the sentiment conversion logic 516 employs a feed forward neural network to train the sentiment conversion AI model 518, which is used to determine AI-based confidences. Such AI-based confidences may be used to determine likelihoods that events will occur.

In another aspect, the sentiment conversion logic 516 employs a transformer-based neural network that generates a response model (e.g., to convert sentiment indications into queries) by utilizing information, such as AI prompts (e.g., the conversion AI prompt 550), sentiment indications (e.g., the sentiment indication 548), dialog portions (e.g., dialog portion 544), relationships between any of the foregoing, and AI-based confidences that are derived therefrom.

In some aspects, the conversion AI prompt 550 includes training logic, and the sentiment conversion AI model 518 includes inference logic. For instance, the training logic may provide sample AI prompts and sample contextual information (e.g., sentiment indications and dialog portions) as inputs to the AI algorithm to train the AI algorithm. The sample data may be labeled. The AI algorithm may be configured to derive relationships between the features (e.g., the conversion AI prompt 550, the sentiment indication 548, and the dialog portion 544) and the resulting AI-based confidences. The inference logic is configured to utilize the AI algorithm, which is trained by the training logic, to determine the AI-based confidence when the features are provided as inputs to the algorithm.

In another example embodiment, the domain-specific issue is security of an account. In accordance with this embodiment, the mitigating factor is a computer-executable instruction to block the account.

In yet another example embodiment, the domain-specific issue is quality of transmission over a communications link. In accordance with this embodiment, the mitigating factor is a computer-executable instruction to increase an amount of bandwidth of the communications link.

In some example embodiments, one or more steps 202, 204, 206, 208, 210, 212, 214, and/or 216 of flowchart 200 may not be performed. Moreover, steps in addition to or in lieu of steps 202, 204, 206, 208, 210, 212, 214, and/or 216 may be performed. For instance, in an example embodiment, the mitigating factor is automatically executed in addition to or in lieu of presenting the response to the query to the second user at step 216. For example, automatic execution of the mitigating factor may be triggered (e.g., in response to causing the response to the query to be generated).

In another example embodiment, the method of flowchart 200 further includes selecting the passages from a plurality of passages based at least on the passages being created on or after a specified date. For instance, ensuring that the passages were created on or after the specified data may increase a likelihood that the passages are relevant to the mitigation of the domain-specific issue. In an example implementation, the passage classification logic 528 selects the passages 572 from the plurality of passages 564 based at least on the passages 572 being created on or after the specified date.

In yet another example embodiment, the method of flowchart 200 further includes causing a citation that cites the information in the subset of the passages, which is used to generate the response to the query, to be generated. In an example implementation, the response generation logic 534 causes a citation 590 that cites the information in the subset 582 of the passages 572, which is used to generate the response 588 to the query 554, to be generated. In accordance with this embodiment, presenting the response to the query to the second user at step 216 includes presenting the citation and the response to the query to the second user via the user interface. In an example implementation, the presentation logic 538 presents the citation 590 and the response 588 to the query 554 to the second user via the user interface.

In still another example embodiment, the method of flowchart 200 further includes one or more of the steps shown in flowchart 300 of FIG. 3. As shown in FIG. 3, the method of flowchart 300 begins at step 302. In step 302, an issue classification AI model is caused to classify the domain-specific issue in a valid domain-specific issue class or an invalid domain-specific issue class by providing an issue classification AI prompt together with the query as inputs to the issue classification AI model. The issue classification AI prompt requests that the issue classification AI model choose between the valid domain-specific issue class and the invalid domain-specific issue class in which to classify the domain-specific issue. The query comprises context regarding the issue classification AI prompt. Classification of the domain-specific issue in the valid domain-specific issue class indicates that the domain-specific issue is a valid domain-specific issue. Classification of the domain-specific issue in the invalid domain-specific issue class indicates that the domain-specific issue is not a valid domain-specific issue. In an example implementation, the issue classification logic 520 causes the issue classification AI model 522 to classify the domain-specific issue in the valid domain-specific issue class or the invalid domain-specific issue class by providing an issue classification AI prompt 556 together with the query 554 as inputs to the issue classification AI model 522. The issue classification AI prompt 556 requests that the issue classification AI model 522 choose between the valid domain-specific issue class and the invalid domain-specific issue class in which to classify the domain-specific issue. The query 554 comprises context regarding the issue classification AI prompt 556. It can be said that the issue classification logic 520 classifies the domain-specific issue in the valid domain-specific issue class or the invalid domain-specific issue class using the issue classification AI model 522. Accordingly, causing the issue classification AI model to classify the domain-specific issue in the valid domain-specific issue class or the invalid domain-specific issue class at step 302 may include classifying the domain-specific issue in the valid domain-specific issue class or the invalid domain-specific issue class using the issue classification AI model.

In an example education implementation, the valid domain-specific issue is defined as a lack of understanding of subject matter in a lesson. In accordance with this implementation, misunderstandings and other issues that do not constitute a lack of understanding of subject matter in a lesson are not valid domain-specific issues.

In an example finance implementation, the valid domain-specific issue is defined as an objection to a term of a loan agreement. In accordance with this implementation, questions and statements that do not constitute an objection to a term of a loan agreement are not valid domain-specific issues.

In an example sales implementation, the valid domain-specific issue is defined as an objection to purchasing a product or a service. In accordance with this implementation, complaints, feedback, and requests that do not constitute an objection to purchasing a product or a service are not valid domain-specific issues.

In an example customer support implementation, the valid domain-specific issue is defined as a complaint regarding a purchased product or service. In accordance with this implementation, complaints, feedback, and requests that do not constitute a complaint regarding a purchased product or service are not valid domain-specific issues.

In an example cloud service implementation, the valid domain-specific issue is defined as a complaint regarding the quality of a cloud service. In accordance with this implementation, complaints, feedback, and requests that do not constitute a complaint regarding the quality of a cloud service are not valid domain-specific issues.

In an example security implementation, the valid domain-specific issue is defined as an indication that security of an account or a device has been compromised. In accordance with this implementation, questions and statements that do not constitute an indication that security of an account or a device has been compromised are not valid domain-specific issues.

At step 304, a response to the issue classification AI prompt is received from the issue classification AI model. The response to the issue classification AI prompt comprises an indication that the domain-specific issue is classified in the valid domain-specific issue class. In an example implementation, the issue classification logic 520 receives an issue classification response 558, which is a response to the issue classification AI prompt 556, from the issue classification AI model 522. The issue classification response 558 comprises an issue classification indication 560, which indicates that the domain-specific issue is classified in the valid domain-specific issue class.

At step 306, based at least on the domain-specific issue being classified in the valid domain-specific issue class, the passage ranking AI model is caused to rank the passages to provide the relevancy ranks. In an example implementation, the passage ranking logic 524 causes the passage ranking AI model 526 to rank the passages 572 to provide the ranking indication 578, which indicates the relevancy ranks, based at least on the issue classification indication 560 indicating that the domain-specific issue is classified in the valid domain-specific issue class. Step 306 may be included in step 208 shown in FIG. 2.

In an aspect of this embodiment, the issue classification logic 520 causes the issue classification AI model 522 to analyze (e.g., develop and/or refine an understanding of) the issue classification AI prompt 556 and the query 554, relationships between any of the foregoing, and confidences in those relationships. For example, the issue classification logic 520 may cause the issue classification AI model 522 to compare attributes of the issue classification AI prompt 556, the query 554, and other contextual information (which may include sample AI prompt(s) and sample queries) using artificial intelligence to classify the domain-specific issue in the valid domain-specific issue class or the invalid domain-specific issue class.

In some aspects, the issue classification AI model 522 includes a neural network that uses the artificial intelligence to determine (e.g., predict) relationships between the issue classification AI prompt 556, the query 554, and the other contextual information and confidences in the relationships. The neural network uses those relationships to classify the domain-specific issue in the valid domain-specific issue class or the invalid domain-specific issue class. For example, attributes of the issue classification AI prompt 556 and the query 554 (and potentially example AI prompt(s) and example queries) may be compared to determine similarities and differences between those attributes. In accordance with this example, the neural network may use those similarities and differences to classify the domain-specific issue in the valid domain-specific issue class or the invalid domain-specific issue class.

In an aspect, the issue classification logic 520 employs a feed forward neural network to train the issue classification AI model 522, which is used to determine AI-based confidences. Such AI-based confidences may be used to determine likelihoods that events will occur.

In another aspect, the issue classification logic 520 employs a transformer-based neural network that generates a response model (e.g., to classify domain-specific issues in the valid domain-specific issue class or the invalid domain-specific issue class) by utilizing information, such as AI prompts (e.g., the issue classification AI prompt 556), queries (e.g., query 554), relationships between any of the foregoing, and AI-based confidences that are derived therefrom.

In some aspects, the issue classification AI prompt 556 includes training logic, and the issue classification AI model 522 includes inference logic. For instance, the training logic may provide sample AI prompts and sample contextual information (e.g., queries) as inputs to the AI algorithm to train the AI algorithm. The sample data may be labeled. The AI algorithm may be configured to derive relationships between the features (e.g., the issue classification AI prompt 556 and the query 554) and the resulting AI-based confidences. The inference logic is configured to utilize the AI algorithm, which is trained by the training logic, to determine the AI-based confidence when the features are provided as inputs to the algorithm.

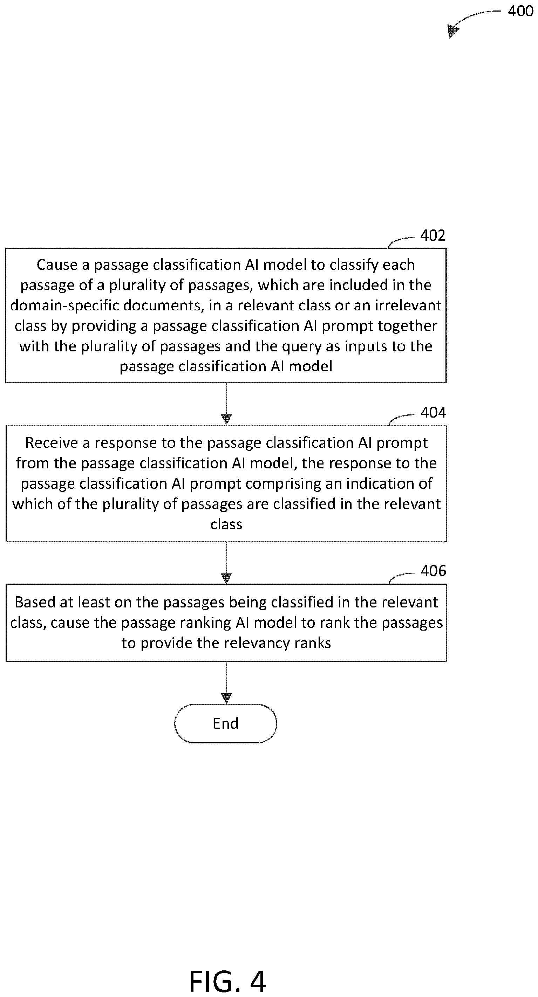

In yet another example embodiment, the method of flowchart 200 further includes one or more of the steps shown in flowchart 400 of FIG. 4. As shown in FIG. 4, the method of flowchart 400 begins at step 402. In step 402, a passage classification AI model is caused to classify each passage of a plurality of passages, which are included in the domain-specific documents, in a relevant class or an irrelevant class by providing a passage classification AI prompt together with the plurality of passages and the query as inputs to the passage classification AI model. The passage classification AI prompt requests that the passage classification AI model choose between the relevant class and the irrelevant class in which to classify each passage of the plurality of passages. The plurality of passages and the query comprise context regarding the passage classification AI prompt. Classification of a passage in the relevant class indicates that the passage is relevant to the mitigation of the domain-specific issue. Classification of a passage in the irrelevant class indicates that the passage is not relevant to the mitigation of the domain-specific issue. In an example implementation, the passage classification logic 528 causes the passage classification AI model 530 to classify each passage of the plurality of passages 564, which are included in the domain-specific documents 562, in the relevant class or the irrelevant class by providing a passage classification AI prompt 566 together with the plurality of passages 564 and the query 554 as inputs to the passage classification AI model 530. The passage classification AI prompt 566 requests that the passage classification AI model 530 choose between the relevant class and the irrelevant class in which to classify each passage of the plurality of passages 564. The plurality of passages 564 and the query 554 comprise context regarding the passage classification AI prompt 566. It can be said that the passage classification logic 528 classifies each passage of the plurality of passages 564 in the relevant class or the irrelevant class using the passage classification AI model 530. Accordingly, causing the passage classification AI model to classify each passage of the plurality of passages in the relevant class or the irrelevant class at step 402 may include classifying each passage of the plurality of passages in the relevant class or the irrelevant class using the passage classification AI model.

At step 404, a response to the passage classification AI prompt is received from the passage classification AI model. The response to the passage classification AI prompt comprises an indication of which of the plurality of passages are classified in the relevant class. In an example implementation, the passage classification logic 528 receives a passage classification response 568, which is a response to the passage classification AI prompt 566, from the passage classification AI model 530. The passage classification response 568 comprises a passage classification indication 570, which indicates which of the plurality of passages 564 are classified in the relevant class.

At step 406, based at least on the passages being classified in the relevant class, the passage ranking AI model is caused to rank the passages to provide the relevancy ranks. In an example implementation, the passage ranking logic 524 causes the passage ranking AI model 526 to rank the passages 572 to provide the relevancy ranks based at least on the passages 572 being classified in the relevant class. In an aspect, by providing the passages 572 to the passage ranking logic 524, the passage classification logic 528 indicates to the passage ranking logic 524 that the passages 572 are classified in the relevant class. Step 406 may be included in step 208 shown in FIG. 2.

In an aspect of this embodiment, the passage classification logic 528 causes the passage classification AI model 530 to analyze (e.g., develop and/or refine an understanding of) the passage classification AI prompt 566, the plurality of passages 564, and the query 554, relationships between any of the foregoing, and confidences in those relationships. For example, the passage classification logic 528 may cause the passage classification AI model 530 to compare attributes of the passage classification AI prompt 566, the plurality of passages 564, the query 554, and other contextual information (which may include sample AI prompt(s), sample passages, and sample queries) using artificial intelligence to classify each passage of the plurality of passages 564 in the relevant class or the irrelevant class.

In some aspects, the passage classification AI model 530 includes a neural network that uses the artificial intelligence to determine (e.g., predict) relationships between the passage classification AI prompt 566, the plurality of passages 564, the query 554, and the other contextual information and confidences in the relationships. The neural network uses those relationships to classify each passage of the plurality of passages 564 in the relevant class or the irrelevant class. For example, attributes of the passage classification AI prompt 566, the plurality of passages 564, and the query 554 (and potentially example AI prompt(s), example passages, and example queries) may be compared to determine similarities and differences between those attributes. In accordance with this example, the neural network may use those similarities and differences to classify each passage of the plurality of passages 564 in the relevant class or the irrelevant class.

In an aspect, the passage classification logic 528 employs a feed forward neural network to train the passage classification AI model 530, which is used to determine AI-based confidences. Such AI-based confidences may be used to determine likelihoods that events will occur.

In another aspect, the passage classification logic 528 employs a transformer-based neural network that generates a response model (e.g., to classify passages in the relevant class or the irrelevant class) by utilizing information, such as AI prompts (e.g., the passage classification AI prompt 566), passages (e.g., the plurality of passages 564), queries (e.g., query 554), relationships between any of the foregoing, and AI-based confidences that are derived therefrom.

In some aspects, the passage classification AI prompt 566 includes training logic, and the passage classification AI model 530 includes inference logic. For instance, the training logic may provide sample AI prompts and sample contextual information (e.g., passages and queries) as inputs to the AI algorithm to train the AI algorithm. The sample data may be labeled. The AI algorithm may be configured to derive relationships between the features (e.g., the passage classification AI prompt 566, the plurality of passages 564, and the query 554) and the resulting AI-based confidences. The inference logic is configured to utilize the AI algorithm, which is trained by the training logic, to determine the AI-based confidence when the features are provided as inputs to the algorithm.

Any one or more of the AI prompts described herein may be a natural language prompt. A natural language prompt is a prompt that is written in a natural language. A natural language is a human language that has developed through use and repetition. For instance, the natural language may have developed naturally without conscious planning or premeditation. Examples of a natural language include English, French, Spanish, and Mandarin. In an aspect, the natural language prompt is generated by a user (e.g., a human). In another aspect, the natural language prompt is generated by a computing system (e.g., an AI assistant that runs on the computing system).

Any one or more of the AI models described herein may include (e.g., be) a generative language model. A generative language model is an AI model that is capable of generating original text output based on sample data. Examples of a generative language model include but are not limited to a generative pre-trained transformer 3 (a.k.a., GPT-3^{®}) model and a generative pre-trained transformer 4 (a.k.a. GPT-4^{®}) model, developed and distributed by OpenAI, Inc.; a large language model Meta AI (a.k.a. LLaMA^{®}) model, developed and distributed by Meta Platforms Inc.; a language model for dialogue applications (a.k.a., LaMDA^{®}) model, developed and distributed by Google LLC; and a BigScience large open-science open-access multilingual language model (a.k.a. BLOOM) model, developed and distributed by the BigScience collaborative initiative. A generative language model may use any suitable relevancy determination and/or ranking technique. For instance, the generative language model may use a BM25 (a.k.a. Okapi BM25) ranking function to perform its analysis (e.g., based on keywords).

Any one or more of the AI models described herein may include a large language model (LLM). A large language model is an artificial neural network that is capable of performing natural language processing (NLP) tasks. For instance, the large language model may use a transformer model to perform the NLP tasks. In an aspect, the large language model is trained (e.g., pre-trained) using self-supervised learning and semi-supervised learning. Examples of a large language model include but are not limited to the GPT-3^{®} and GPT-4^{®} models, developed and distributed by OpenAI, Inc.; the LLaMA^{®} model, developed and distributed by Meta Platforms Inc.; and a pathways language model (a.k.a., PaLM^{®}) model, developed and distributed by Google LLC.

Any one or more of the AI models described herein may include an embedding model. An embedding model is an AI model that uses deep learning to convert data into vectors, which represent attributes of the data, and that compares at least a subset of the vectors to determine an extent to which the vectors that are included in the subset are similar. For instance, each vector may represent a semantic meaning of an AI prompt, a statement in a domain-specific dialog, a query, or a passage in a domain-specific document.

Any one or more of the AI models described herein may include a custom model, a proprietary model that is not available for use by the general public, and/or a domain-specific model that is associated with (e.g., specific to) the designated domain. The domain-specific elements described herein (e.g., the domain-specific negative sentiment, the domain-specific conversation, the domain-specific dialog, the domain-specific issue, and the domain-specific documents) are associated with (e.g., specific to) the designated domain.

Any one or more of the AI models described herein may include multiple types of AI models. Weights may be applied to the responses generated by the respective types of AI models. For example, a designated AI model may include a generative AI model and an embedding model. In accordance with this example, a first weight may be applied to a first response generated by the generative AI model to provide a first weighted response, and a second weight that is different from the first weight may be applied to a second response of the embedding model to provide a second weighted response. The designated AI model may combine (e.g., sum) the first weighted response and the second weighted response to provide to generate a response of the designated AI model.

It will be recognized that the computing system 500 may not include one or more of the real-time domain-specific issue logic 508, the store 510, the domain sentiment logic 512, the domain sentiment AI model 514, the sentiment conversion logic 516, the sentiment conversion AI model 518, the issue classification logic 520, the issue classification AI model 522, the passage ranking logic 524, the passage ranking AI model 526, the passage classification logic 528, the passage classification AI model 530, the criterion satisfaction logic 532, the response generation logic 534, the response generation AI model 536, and/or the presentation logic 538. Furthermore, the computing system 500 may include components in addition to or in lieu of the real-time domain-specific issue logic 508, the store 510, the domain sentiment logic 512, the domain sentiment AI model 514, the sentiment conversion logic 516, the sentiment conversion AI model 518, the issue classification logic 520, the issue classification AI model 522, the passage ranking logic 524, the passage ranking AI model 526, the passage classification logic 528, the passage classification AI model 530, the criterion satisfaction logic 532, the response generation logic 534, the response generation AI model 536, and/or the presentation logic 538.

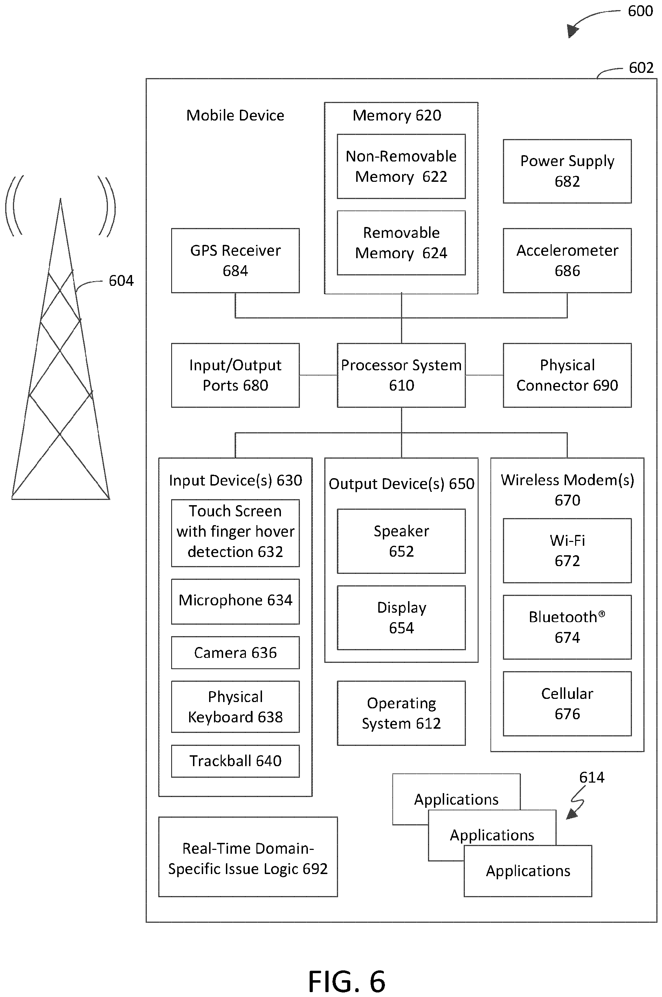

FIG. 6 is a system diagram of an example mobile device 600 including a variety of optional hardware and software components, shown generally as 602. Any components 602 in the mobile device may communicate with any other component, though not all connections are shown, for ease of illustration. The mobile device 600 may be any of a variety of computing devices (e.g., cell phone, smartphone, handheld computer, Personal Digital Assistant (PDA), etc.) and may allow wireless two-way communications with one or more mobile communications networks 604, such as a cellular or satellite network, or with a local area or wide area network.

The mobile device 600 includes a processor system 610 (e.g., signal processor, microprocessor, ASIC, or other control and processing logic circuitry) for performing such tasks as signal coding, data processing, input/output processing, power control, and/or other functions. An operating system 612 may control the allocation and usage of the components 602 and support for one or more applications 614 (a.k.a. application programs). The applications 614 may include common mobile computing applications (e.g., email applications, calendars, contact managers, web browsers, messaging applications) and any other computing applications (e.g., word processing applications, mapping applications, media player applications).

The mobile device 600 includes real-time domain-specific issue logic 692, which is operable in a manner similar to the real-time domain-specific issue logic 108 described above with reference to FIG. 1 and/or the real-time domain-specific issue logic 508 described above with reference to FIG. 5.

The mobile device 600 includes memory 620. The memory 620 may include non-removable memory 622 and/or removable memory 624. The non-removable memory 622 may include random access memory (RAM), read-only memory (ROM), flash memory, a hard disk, or other well-known memory storage technologies. The removable memory 624 may include flash memory or a Subscriber Identity Module (SIM) card, which is well known in Global System for Mobile Communications (GSM) systems, or other well-known memory storage technologies, such as "smart cards." The memory 620 may store data and/or code for running the operating system 612 and the applications 614. Example data may include web pages, text, images, sound files, video data, or other data sets to be sent to and/or received from one or more network servers or other devices via one or more wired or wireless networks. Memory 620 may store a subscriber identifier, such as an International Mobile Subscriber Identity (IMSI), and an equipment identifier, such as an International Mobile Equipment Identifier (IMEI). Such identifiers may be transmitted to a network server to identify users and equipment.

The mobile device 600 may support one or more input devices 630, such as a touch screen 632, microphone 634, camera 636, physical keyboard 638 and/or trackball 640 and one or more output devices 650, such as a speaker 652 and a display 654. Touch screens, such as the touch screen 632, may detect input in different ways. For example, capacitive touch screens detect touch input when an object (e.g., a fingertip) distorts or interrupts an electrical current running across the surface. As another example, touch screens may use optical sensors to detect touch input when beams from the optical sensors are interrupted. Physical contact with the surface of the screen is not necessary for input to be detected by some touch screens. For example, the touch screen 632 may support a finger hover detection using capacitive sensing, as is well understood. Other detection techniques may be used, including camera-based detection and ultrasonic-based detection. To implement a finger hover, a user's finger is typically within a predetermined spaced distance above the touch screen, such as between 0.1 to 0.25 inches, or between 0.25 inches and 0.5 inches, or between 0.5 inches and 0.75 inches, or between 0.75 inches and 1 inch, or between 1 inch and 1.5 inches, etc.

Other possible output devices (not shown) may include piezoelectric or other haptic output devices. Some devices may serve more than one input/output function. For example, touch screen 632 and display 654 may be combined in a single input/output device. The input devices 630 may include a Natural User Interface (NUI). An NUI is any interface technology that enables a user to interact with a device in a "natural" manner, free from artificial constraints imposed by input devices such as mice, keyboards, remote controls, and the like. Examples of NUI methods include those relying on speech recognition, touch and stylus recognition, gesture recognition both on screen and adjacent to the screen, air gestures, head and eye tracking, voice and speech, vision, touch, gestures, and machine intelligence. Other examples of a NUI include motion gesture detection using accelerometers/gyroscopes, facial recognition, 3D displays, head, eye, and gaze tracking, immersive augmented reality and virtual reality systems, all of which provide a more natural interface, as well as technologies for sensing brain activity using electric field sensing electrodes (EEG and related methods). Thus, in one specific example, the operating system 612 or applications 614 may include speech-recognition software as part of a voice control interface that allows a user to operate the mobile device 600 via voice commands. Furthermore, the mobile device 600 may include input devices and software that allows for user interaction via a user's spatial gestures, such as detecting and interpreting gestures to provide input to a gaming application.

Wireless modem(s) 670 may be coupled to antenna(s) (not shown) and may support two-way communications between the processor system 610 and external devices, as is well understood in the art. The modem(s) 670 are shown generically and may include a cellular modem 676 for communicating with the mobile communication network 604 and/or other radio-based modems (e.g., Bluetooth^{®} 674 and/or Wi-Fi 672). At least one of the wireless modem(s) 670 is typically configured for communication with one or more cellular networks, such as a GSM network for data and voice communications within a single cellular network, between cellular networks, or between the mobile device and a public switched telephone network (PSTN).

The mobile device 600 may further include at least one input/output port 680, a power supply 682, a satellite navigation system receiver 684, such as a Global Positioning System (GPS) receiver, an accelerometer 686, and/or a physical connector 690, which may be a universal serial bus (USB) port, IEEE 1394 (FireWire) port, and/or RS-232 port. The illustrated components 602 are not required or all-inclusive, as any components may be deleted and other components may be added as would be recognized by one skilled in the art.

Although the operations of some of the disclosed methods are described in a particular, sequential order for convenient presentation, it should be understood that this manner of description encompasses rearrangement, unless a particular ordering is required by specific language set forth herein. For example, operations described sequentially may in some cases be rearranged or performed concurrently. Moreover, for the sake of simplicity, the attached figures may not show the various ways in which the disclosed methods may be used in conjunction with other methods.

Any one or more of the real-time domain-specific issue logic 108, the real-time domain-specific issue logic 508, the store 510, the domain sentiment logic 512, the domain sentiment AI model 514, the sentiment conversion logic 516, the sentiment conversion AI model 518, the issue classification logic 520, the issue classification AI model 522, the passage ranking logic 524, the passage ranking AI model 526, the passage classification logic 528, the passage classification AI model 530, the criterion satisfaction logic 532, the response generation logic 534, the response generation AI model 536, the presentation logic 538, flowchart 200, flowchart 300, and/or flowchart 400 may be implemented in hardware, software, firmware, or any combination thereof.

For example, any one or more of the real-time domain-specific issue logic 108, the real-time domain-specific issue logic 508, the store 510, the domain sentiment logic 512, the domain sentiment AI model 514, the sentiment conversion logic 516, the sentiment conversion AI model 518, the issue classification logic 520, the issue classification AI model 522, the passage ranking logic 524, the passage ranking AI model 526, the passage classification logic 528, the passage classification AI model 530, the criterion satisfaction logic 532, the response generation logic 534, the response generation AI model 536, the presentation logic 538, flowchart 200, flowchart 300, and/or flowchart 400 may be implemented, at least in part, as computer program code configured to be executed in one or more processors.

In another example, any one or more of the real-time domain-specific issue logic 108, the real-time domain-specific issue logic 508, the store 510, the domain sentiment logic 512, the domain sentiment AI model 514, the sentiment conversion logic 516, the sentiment conversion AI model 518, the issue classification logic 520, the issue classification AI model 522, the passage ranking logic 524, the passage ranking AI model 526, the passage classification logic 528, the passage classification AI model 530, the criterion satisfaction logic 532, the response generation logic 534, the response generation AI model 536, the presentation logic 538, flowchart 200, flowchart 300, and/or flowchart 400 may be implemented, at least in part, as hardware logic/electrical circuitry. Such hardware logic/electrical circuitry may include one or more hardware logic components. Examples of a hardware logic component include but are not limited to a field-programmable gate array (FPGA), an application-specific integrated circuit (ASIC), an application-specific standard product (ASSP), a system-on-a-chip system (SoC), a complex programmable logic device (CPLD), etc. For instance, a SoC may include an integrated circuit chip that includes one or more of a processor (e.g., a microcontroller, microprocessor, digital signal processor (DSP), etc.), memory, one or more communication interfaces, and/or further circuits and/or embedded firmware to perform its functions.

### II. Further Discussion of Some Example Embodiments

(A1) A first example system (Figure 1, 102A-102M, 106A-106N; Figure 5, 500; Figure 6, 602; Figure 7, 700) comprises a processor system (Figure 6, 610; Figure 7, 702) and a memory (Figure 6, 620, 622, 624; Figure 7, 704, 708, 710) that stores computer-executable instructions. The computer-executable instructions are executable by the processor system to at least cause (Figure 2, 202) a domain sentiment AI model (Figure 5, 514) to detect a domain-specific negative sentiment, which is associated with a designated domain, in a statement of a first user, which is included in a domain-specific dialog (Figure 5, 540) that represents a domain-specific conversation between the first user and a second user, in real-time during the domain-specific conversation by providing a sentiment AI prompt (Figure 5, 542) together with at least a portion (Figure 5, 544) of the domain-specific dialog as inputs to the domain sentiment AI model. The sentiment AI prompt requests that the domain sentiment AI model determine whether the domain-specific dialog includes the domain-specific negative sentiment. The portion of the domain-specific dialog comprises context regarding the sentiment AI prompt. The computer-executable instructions are executable by the processor system further to at least receive (Figure 2, 204) a response (Figure 5, 546) to the sentiment AI prompt from the domain sentiment AI model. The response to the sentiment AI prompt comprises an indication (Figure 5, 548) of the domain-specific negative sentiment. The computer-executable instructions are executable by the processor system further to at least cause (Figure 2, 206) the indication of the domain-specific negative sentiment to be converted into a query (Figure 5, 554) that describes a domain-specific issue. The computer-executable instructions are executable by the processor system further to at least cause (Figure 2, 208) a passage ranking AI model (Figure 5, 526) to rank passages (Figure 5, 572), which are included in domain-specific documents, to provide relevancy ranks, which represent relevancies of the passages with regard to mitigation of the domain-specific issue, by providing a ranking AI prompt (Figure 5, 574) together with the passages and the query as inputs to the passage ranking AI model. The ranking AI prompt requests that the passage ranking AI model rank the passages based on relevancy to the mitigation of the domain-specific issue. The passages and the query comprise context regarding the ranking AI prompt. The computer-executable instructions are executable by the processor system further to at least receive (Figure 2, 210) a response (Figure 5, 576) to the ranking AI prompt from the passage ranking AI model. The response to the ranking AI prompt comprises an indication (Figure 5, 578) of the relevancy ranks of the passages. The computer-executable instructions are executable by the processor system further to at least identify (Figure 2, 212) a subset (Figure 5, 582) of the passages such that the relevancy rank of each passage in the subset satisfies a relevancy criterion. The computer-executable instructions are executable by the processor system further to at least cause (Figure 2, 214) a response (Figure 5, 588) to the query to be generated using information in the subset of the passages. The response to the query specifying a mitigating factor that mitigates the domain-specific issue. The computer-executable instructions are executable by the processor system further to at least present (Figure 2, 216) the response to the query to the second user via a user interface.

(A2) In the example system of A1, wherein the computer-executable instructions are executable by the processor system to at least: cause a sentiment conversion AI model to convert the indication of the domain-specific negative sentiment into the query that describes the domain-specific issue by providing a conversion AI prompt together with the indication of the domain-specific negative sentiment and at least the portion of the domain-specific dialog as inputs to the sentiment conversion AI model, the conversion AI prompt requesting that the sentiment conversion AI model convert the indication of the domain-specific negative sentiment into the query, wherein the indication of the domain-specific negative sentiment and at least the portion of the domain-specific dialog comprise context regarding the conversion AI prompt; and receive a response to the conversion AI prompt from the sentiment conversion AI model, the response to the conversion AI prompt comprising the query.

(A3) In the example system of any of A1-A2, wherein the computer-executable instructions are executable by the processor system to at least: cause an issue classification AI model to classify the domain-specific issue in a valid domain-specific issue class or an invalid domain-specific issue class by providing an issue classification AI prompt together with the query as inputs to the issue classification AI model, the issue classification AI prompt requesting that the issue classification AI model choose between the valid domain-specific issue class and the invalid domain-specific issue class in which to classify the domain-specific issue, wherein the query comprises context regarding the issue classification AI prompt, wherein classification of the domain-specific issue in the valid domain-specific issue class indicates that the domain-specific issue is a valid domain-specific issue, and wherein classification of the domain-specific issue in the invalid domain-specific issue class indicates that the domain-specific issue is not a valid domain-specific issue; receive a response to the issue classification AI prompt from the issue classification AI model, the response to the issue classification AI prompt comprising an indication that the domain-specific issue is classified in the valid domain-specific issue class; and cause the passage ranking AI model to rank the passages based at least on the domain-specific issue being classified in the valid domain-specific issue class.

(A4) In the example system of any of A1-A3, wherein the computer-executable instructions are executable by the processor system to at least: cause a passage classification AI model to classify each passage of a plurality of passages, which are included in the domain-specific documents, in a relevant class or an irrelevant class by providing a passage classification AI prompt together with the plurality of passages and the query as inputs to the passage classification AI model, the passage classification AI prompt requesting that the passage classification AI model choose between the relevant class and the irrelevant class in which to classify each passage of the plurality of passages, wherein the plurality of passages and the query comprise context regarding the passage classification AI prompt, wherein classification of a passage in the relevant class indicates that the passage is relevant to the mitigation of the domain-specific issue, and wherein classification of a passage in the irrelevant class indicates that the passage is not relevant to the mitigation of the domain-specific issue; receive a response to the passage classification AI prompt from the passage classification AI model, the response to the passage classification AI prompt comprising an indication of which of the plurality of passages are classified in the relevant class; and cause the passage ranking AI model to rank the passages based at least on the passages being classified in the relevant class.

(A5) In the example system of any of A1-A4, wherein the computer-executable instructions are executable by the processor system to at least: cause a response generation AI model to generate the response to the query by providing a generation AI prompt together with the subset of the passages and the query as inputs to the response generation AI model, the generation AI prompt requesting that the response generation AI model generate the response to the query, wherein the subset of the passages and the query comprise context regarding the generation AI prompt; and receive a response to the generation AI prompt from the response generation AI model, the response to the generation AI prompt comprising the response to the query.

(A6) In the example system of any of A1-A5, wherein the response to the query has at least one of the following: a tone that corresponds to a reference tone of the second user, a style that corresponds to a reference style of the second user, or a personality that corresponds to a reference personality of the second user.

(A7) In the example system of any of A1-A6, wherein the computer-executable instructions are executable by the processor system further to at least: select the passages from a plurality of passages based at least on the passages being created on or after a specified date.

(A8) In the example system of any of A1-A7, wherein the computer-executable instructions are executable by the processor system further to at least: cause a citation that cites the information in the subset of the passages, which is used to generate the response to the query, to be generated; and present the citation to the second user via the user interface.

(A9) In the example system of any of A1-A8, wherein the computer-executable instructions are executable by the processor system to at least: cause the domain sentiment AI model to detect the domain-specific negative sentiment in the statement of the first user based at least on a tone of the first user that is indicated by the statement.

(B1) A second example system (Figure 1, 102A-102M, 106A-106N; Figure 5, 500; Figure 6, 602; Figure 7, 700) comprises a processor system (Figure 6, 610; Figure 7, 702) and a memory (Figure 6, 620, 622, 624; Figure 7, 704, 708, 710) that stores computer-executable instructions. The computer-executable instructions are executable by the processor system to at least cause (Figure 2, 202) a first AI model (Figure 5, 514) to detect a domain-specific negative sentiment, which is associated with a designated domain, in a statement of a first user, which is included in a domain-specific dialog (Figure 5, 540) that represents a domain-specific conversation between the first user and a second user, in real-time during the domain-specific conversation by providing a first AI prompt (Figure 5, 542) together with at least a portion (Figure 5, 544) of the domain-specific dialog as inputs to the first AI model. The first AI prompt requests that the first AI model determine whether the domain-specific dialog includes the domain-specific negative sentiment, wherein the portion of the domain-specific dialog comprises context regarding the first AI prompt. The computer-executable instructions are executable by the processor system further to at least receive (Figure 2, 204) (Figure 2, 204) a response (Figure 5, 546) to the first AI prompt from the first AI model. The response to the first AI prompt comprises an indication (Figure 5, 548) of the domain-specific negative sentiment. The computer-executable instructions are executable by the processor system further to at least cause (Figure 2, 206) the indication of the domain-specific negative sentiment to be converted into a query (Figure 5, 554) that describes a domain-specific issue. The computer-executable instructions are executable by the processor system further to at least cause (Figure 2, 208) a second AI model (Figure 5, 526) to rank passages (Figure 5, 572), which are included in domain-specific documents, to provide ranks (Figure 5, 578), which represent relevancies of the passages with regard to mitigation of the domain-specific issue, by providing a second AI prompt (Figure 5, 574) together with the passages and the query as inputs to the second AI model. The second AI prompt requests that the second AI model rank the passages by mitigation of the domain-specific issue. The passages and the query comprise context regarding the second AI prompt. The computer-executable instructions are executable by the processor system further to at least receive (Figure 2, 210) a response (Figure 5, 576) to the second AI prompt from the second AI model. The response to the second AI prompt comprises the ranks of the passages. The computer-executable instructions are executable by the processor system further to at least identify (Figure 2, 212) a subset (Figure 5, 582) of the passages such that the rank of each passage in the subset satisfies a criterion. The computer-executable instructions are executable by the processor system further to at least cause (Figure 2, 214) a response (Figure 5, 588) to the query to be generated using information in the subset of the passages. The response to the query specifies a mitigating factor that mitigates the domain-specific issue. The computer-executable instructions are executable by the processor system further to at least trigger any of: presentation (Figure 2, 216) of the response to the query to the second user via a user interface; automatic execution of the mitigating factor.

(B2) In the example system of B1, wherein the domain-specific issue is security of an account; and wherein the mitigating factor is a computer-executable instruction to block the account.

(B3) In the example system of any of B1-B2, wherein the domain-specific issue is quality of transmission over a communications link; and wherein the mitigating factor is a computer-executable instruction to increase an amount of bandwidth of the communications link.

(B4) In the example system of any of B1-B3, wherein the computer-executable instructions are executable by the processor system to at least: cause a third AI model to convert the indication of the domain-specific negative sentiment into the query that describes the domain-specific issue by providing a third AI prompt together with the indication of the domain-specific negative sentiment and at least the portion of the domain-specific dialog as inputs to the third AI model, the third AI prompt requesting that the third AI model convert the indication of the domain-specific negative sentiment into the query, wherein the indication of the domain-specific negative sentiment and at least the portion of the domain-specific dialog comprise context regarding the third AI prompt; and receive a response to the third AI prompt from the third AI model, the response to the third AI prompt comprising the query.

(B5) In the example system of any of B1-B4, wherein the computer-executable instructions are executable by the processor system to at least: cause a third AI model to classify the domain-specific issue in a valid domain-specific issue class or an invalid domain-specific issue class by providing a third AI prompt together with the query as inputs to the third AI model, the third AI prompt requesting that the third AI model choose between the valid domain-specific issue class and the invalid domain-specific issue class in which to classify the domain-specific issue, wherein the query comprises context regarding the third AI prompt, wherein classification of the domain-specific issue in the valid domain-specific issue class indicates that the domain-specific issue is a valid domain-specific issue, and wherein classification of the domain-specific issue in the invalid domain-specific issue class indicates that the domain-specific issue is not a valid domain-specific issue; receive a response to the third AI prompt from the third AI model, the response to the third AI prompt comprising an indication that the domain-specific issue is classified in the valid domain-specific issue class; and cause the second AI model to rank the passages based at least on the domain-specific issue being classified in the valid domain-specific issue class.

(B6) In the example system of any of B1-B5, wherein the computer-executable instructions are executable by the processor system to at least: cause a third AI model to classify each passage of a plurality of passages, which are included in the domain-specific documents, in a relevant class or an irrelevant class by providing a third AI prompt together with the plurality of passages and the query as inputs to the third AI model, the third AI prompt requesting that the third AI model choose between the relevant class and the irrelevant class in which to classify each passage of the plurality of passages, wherein the plurality of passages and the query comprise context regarding the third AI prompt, wherein classification of a passage in the relevant class indicates that the passage is relevant to the mitigation of the domain-specific issue, and wherein classification of a passage in the irrelevant class indicates that the passage is not relevant to the mitigation of the domain-specific issue; receive a response to the third AI prompt from the third AI model, the response to the third AI prompt comprising an indication of which of the plurality of passages are classified in the relevant class; and cause the second AI model to rank the passages based at least on the passages being classified in the relevant class.

(B7) In the example system of any of B1-B6, wherein the computer-executable instructions are executable by the processor system to at least: cause a third AI model to generate the response to the query by providing a third AI prompt together with the subset of the passages and the query as inputs to the third AI model, the third AI prompt requesting that the third AI model generate the response to the query, wherein the subset of the passages and the query comprise context regarding the third AI prompt; and receive a response to the third AI prompt from the third AI model, the response to the third AI prompt comprising the response to the query.

(B8) In the example system of any of B1-B7, wherein the response to the query has at least one of the following: a tone that corresponds to a reference tone of the second user, a style that corresponds to a reference style of the second user, or a personality that corresponds to a reference personality of the second user.

(B9) In the example system of any of B1-B8, wherein the computer-executable instructions are executable by the processor system further to at least: select the passages from a plurality of passages based at least on the passages being created on or after a specified date.

(B10) In the example system of any of B1-B9, wherein the computer-executable instructions are executable by the processor system further to at least: cause a citation that cites the information in the subset of the passages, which is used to generate the response to the query, to be generated; and present the citation to the second user via the user interface.

(B11) In the example system of any of B1-B10, wherein the computer-executable instructions are executable by the processor system to at least: cause the first AI model to detect the domain-specific negative sentiment in the statement of the first user based at least on a tone of the first user that is indicated by the statement.

(C1) A first example method is implemented by a computing system (Figure 1, 102A-102M, 106A-106N; Figure 5, 500; Figure 6, 602; Figure 7, 700). The method comprises detecting (Figure 2, 202) a domain-specific negative sentiment, which is associated with a designated domain, in a statement of a first user, which is included in a domain-specific dialog (Figure 5, 540) that represents a domain-specific conversation between the first user and a second user, in real-time during the domain-specific conversation by providing a sentiment AI prompt (Figure 5, 542) together with at least a portion (Figure 5, 544) of the domain-specific dialog as inputs to a domain sentiment AI model (Figure 5, 514), which causes the domain sentiment AI model to generate a response (Figure 5, 546) to the sentiment AI prompt. The sentiment AI prompt inquires whether the domain-specific dialog includes the domain-specific negative sentiment. The portion of the domain-specific dialog comprises context regarding the sentiment AI prompt. The response to the sentiment AI prompt comprises an indication (Figure 5, 548) of the domain-specific negative sentiment. The method further comprises converting (Figure 2, 206) the indication of the domain-specific negative sentiment into a query (Figure 5, 554) that describes a domain-specific issue. The method further comprises ranking (Figure 2, 208) passages (Figure 5, 572), which are included in domain-specific documents, to provide relevancy ranks, which represent relevancies of the passages with regard to mitigation of the domain-specific issue, by providing a ranking AI prompt (Figure 5, 574) together with the passages and the query as inputs to a passage ranking AI model (Figure 5, 526), which causes the passage ranking AI model to generate a response (Figure 5, 576) to the ranking AI prompt. The ranking AI prompt requests that the passage ranking AI model rank the passages with regard to relevancy to the mitigation of the domain-specific issue. The passages and the query comprise context regarding the ranking AI prompt. The response to the ranking AI prompt comprises an indication (Figure 5, 578) of the relevancy ranks of the passages. The method further comprises identifying (Figure 2, 212) a subset (Figure 5, 582) of the passages such that the relevancy rank of each passage in the subset satisfies a relevancy criterion. The method further comprises generating (Figure 2, 214) a response (Figure 5, 588) to the query using information in the subset of the passages. The response to the query specifies a mitigating factor that mitigates the domain-specific issue. The method further comprises presenting (Figure 2, 216) the response to the query to the second user via a user interface.

(C2) In the example method of C1, wherein converting the indication of the domain-specific negative sentiment into the query comprises: converting the indication of the domain-specific negative sentiment into the query that describes the domain-specific issue by providing a conversion AI prompt together with the indication of the domain-specific negative sentiment and at least the portion of the domain-specific dialog as inputs to a sentiment conversion AI model, which causes the sentiment conversion AI model to generate a response to the conversion AI prompt; wherein the conversion AI prompt requests that the sentiment conversion AI model convert the indication of the domain-specific negative sentiment into the query; wherein the indication of the domain-specific negative sentiment and at least the portion of the domain-specific dialog comprise context regarding the conversion AI prompt; and wherein the response to the conversion AI prompt comprises the query.

(C3) In the example method of any of C1-C2, further comprising: classifying the domain-specific issue with regard to validity by providing an issue classification AI prompt together with the query as inputs to an issue classification AI model, which causes the issue classification AI model to generate a response to the issue classification AI prompt; wherein the issue classification AI prompt requests classification of the domain-specific issue with regard to validity; wherein the query comprises context regarding the issue classification AI prompt; wherein the response to the issue classification AI prompt comprises an indication that the domain-specific issue is classified in a valid domain-specific issue class, which indicates that the domain-specific issue is a valid domain-specific issue; and wherein the passages are ranked based at least on the domain-specific issue being classified in the valid domain-specific issue class.

(C4) In the example method of any of C1-C3, further comprising: classifying each passage of a plurality of passages, which are included in the domain-specific documents, with regard to relevancy to the mitigation of the domain-specific issue by providing a passage classification AI prompt together with the plurality of passages and the query as inputs to a passage classification AI model, which causes the passage classification AI model to generate a response to the passage classification AI prompt; wherein the passage classification AI prompt requests classification of each passage of the plurality of passages with regard to relevancy to the mitigation of the domain-specific issue; wherein the plurality of passages and the query comprise context regarding the passage classification AI prompt; wherein the response to the passage classification AI prompt comprises an indication of whether each passage of the plurality of passages is relevant to the mitigation of the domain-specific issue; and wherein the passages are ranked based at least on the passages being classified as relevant to the mitigation of the domain-specific issue.

(C5) In the example method of any of C1-C4, wherein causing the response to the query to be generated comprises: causing the response to the query to be generated by providing a generation AI prompt together with the subset of the passages and the query as inputs to a response generation AI model, which causes the response generation AI model to generate a response to the generation AI prompt; wherein the generation AI prompt requests generation of the response to the query; wherein the subset of the passages and the query comprise context regarding the generation AI prompt; and wherein the response to the generation AI prompt comprises the response to the query.

(C6) In the example method of any of C1-C5, wherein the response to the query has at least one of the following: a tone that corresponds to a reference tone of the second user, a style that corresponds to a reference style of the second user, or a personality that corresponds to a reference personality of the second user.

(C7) In the example method of any of C1-C6, further comprising: selecting the passages from a plurality of passages based at least on the passages being created on or after a specified date.

(C8) In the example method of any of C1-C7, further comprising: causing a citation that cites the information in the subset of the passages, which is used to generate the response to the query, to be generated; wherein presenting the response to the query to the second user comprises: presenting the citation and the response to the query to the second user via the user interface.

(C9) In the example method of any of C1-C8, wherein the domain-specific negative sentiment is detected in the statement of the first user based at least on a tone of the first user that is indicated by the statement.

(D1) A second example method is implemented by a computing system (Figure 1, 102A-102M, 106A-106N; Figure 5, 500; Figure 6, 602; Figure 7, 700). The method comprises detecting (Figure 2, 202) a domain-specific negative sentiment, which is associated with a designated domain, in a statement of a first user, which is included in a domain-specific dialog (Figure 5, 540) that represents a domain-specific conversation between the first user and a second user, in real-time during the domain-specific conversation by providing a first AI prompt (Figure 5, 542) together with at least a portion (Figure 5, 544) of the domain-specific dialog as inputs to a first AI model (Figure 5, 514), which causes the first AI model to generate a response (Figure 5, 546) to the first AI prompt. The first AI prompt inquires whether the domain-specific dialog includes the domain-specific negative sentiment. The portion of the domain-specific dialog comprises context regarding the first AI prompt. The response to the first AI prompt comprises an indication (Figure 5, 548) of the domain-specific negative sentiment. The method further comprises converting (Figure 2, 206) the indication of the domain-specific negative sentiment into a query (Figure 5, 554) that describes a domain-specific issue. The method further comprises ranking (Figure 2, 208) passages (Figure 5, 572), which are included in domain-specific documents, to provide ranks (Figure 5, 578), which represent relevancies of the passages with regard to mitigation of the domain-specific issue, by providing a second AI prompt (Figure 5, 574) together with the passages and the query as inputs to a second AI model (Figure 5, 526), which causes the second AI model to generate a response (Figure 5, 576) to the second AI prompt. The second AI prompt requests that the second AI model rank the passages with regard to relevancy to the mitigation of the domain-specific issue. The passages and the query comprise context regarding the second AI prompt. The response to the second AI prompt comprises the ranks of the passages. The method further comprises identifying (Figure 2, 212) a subset (Figure 5, 582) of the passages such that the rank of each passage in the subset satisfies a criterion. The method further comprises generating (Figure 2, 214) a response (Figure 5, 588) to the query using information in the subset of the passages. The response to the query specifies a mitigating factor that mitigates the domain-specific issue. The method further comprises triggering any of: presentation (Figure 2, 216) of the response to the query to the second user via a user interface; automatic execution of the mitigating factor.

(D2) In the example method of D1, wherein the domain-specific issue is security of an account; and wherein the mitigating factor is a computer-executable instruction to block the account.

(D3) In the example method of any of D1-D2, wherein the domain-specific issue is quality of transmission over a communications link; and wherein the mitigating factor is a computer-executable instruction to increase an amount of bandwidth of the communications link.

(D4) In the example method of any of D1-D3, wherein converting the indication of the domain-specific negative sentiment into the query comprises: converting the indication of the domain-specific negative sentiment into the query that describes the domain-specific issue by providing a third AI prompt together with the indication of the domain-specific negative sentiment and at least the portion of the domain-specific dialog as inputs to a third AI model, which causes the third AI model to generate a response to the third AI prompt; wherein the third AI prompt requests that the third AI model convert the indication of the domain-specific negative sentiment into the query; wherein the indication of the domain-specific negative sentiment and at least the portion of the domain-specific dialog comprise context regarding the third AI prompt; and wherein the response to the third AI prompt comprises the query.

(D5) In the example method of any of D1-D4, further comprising: classifying the domain-specific issue with regard to validity by providing a third AI prompt together with the query as inputs to a third AI model, which causes the third AI model to generate a response to the third AI prompt; wherein the third AI prompt requests classification of the domain-specific issue with regard to validity; wherein the query comprises context regarding the third AI prompt; wherein the response to the third AI prompt comprises an indication that the domain-specific issue is classified in a valid domain-specific issue class, which indicates that the domain-specific issue is a valid domain-specific issue; and wherein the passages are ranked based at least on the domain-specific issue being classified in the valid domain-specific issue class.

(D6) In the example method of any of D1-D5, further comprising: classifying each passage of a plurality of passages, which are included in the domain-specific documents, with regard to relevancy to the mitigation of the domain-specific issue by providing a third AI prompt together with the plurality of passages and the query as inputs to a third AI model, which causes the third AI model to generate a response to the third AI prompt; wherein the third AI prompt requests classification of each passage of the plurality of passages with regard to relevancy to the mitigation of the domain-specific issue; wherein the plurality of passages and the query comprise context regarding the third AI prompt; wherein the response to the third AI prompt comprises an indication of whether each passage of the plurality of passages is relevant to the mitigation of the domain-specific issue; and wherein the passages are ranked based at least on the passages being classified as relevant to the mitigation of the domain-specific issue.

(D7) In the example method of any of D1-D6, wherein causing the response to the query to be generated comprises: causing the response to the query to be generated by providing a third AI prompt together with the subset of the passages and the query as inputs to a third AI model, which causes the third AI model to generate a response to the third AI prompt; wherein the third AI prompt requests generation of the response to the query; wherein the subset of the passages and the query comprise context regarding the third AI prompt; and wherein the response to the third AI prompt comprises the response to the query.

(D8) In the example method of any of D1-D7, wherein the response to the query has at least one of the following: a tone that corresponds to a reference tone of the second user, a style that corresponds to a reference style of the second user, or a personality that corresponds to a reference personality of the second user.

(D9) In the example method of any of D1-D8, further comprising: selecting the passages from a plurality of passages based at least on the passages being created on or after a specified date.

(D10) In the example method of any of D1-D9, further comprising: causing a citation that cites the information in the subset of the passages, which is used to generate the response to the query, to be generated; wherein presenting the response to the query to the second user comprises: presenting the citation and the response to the query to the second user via the user interface.

(D11) In the example method of any of D1-D10, wherein the domain-specific negative sentiment is detected in the statement of the first user based at least on a tone of the first user that is indicated by the statement.

(E1) A first example computer program product (Figure 6, 624; Figure 7, 718, 722) comprises a computer-readable storage medium having instructions recorded thereon for enabling a processor-based system (Figure 1, 102A-102M, 106A-106N; Figure 5, 500; Figure 6, 602; Figure 7, 700) to perform operations. The operations comprise causing (Figure 2, 202) a domain sentiment AI model (Figure 5, 514) to detect a domain-specific negative sentiment, which is associated with a designated domain, in a statement of a first user, which is included in a domain-specific dialog (Figure 5, 540) that represents a domain-specific conversation between the first user and a second user, in real-time during the domain-specific conversation by providing a sentiment AI prompt (Figure 5, 542) together with at least a portion (Figure 5, 544) of the domain-specific dialog as inputs to the domain sentiment AI model. The sentiment AI prompt requests that the domain sentiment AI model determine whether the domain-specific dialog includes the domain-specific negative sentiment. The portion of the domain-specific dialog comprises context regarding the sentiment AI prompt. The operations further comprise receiving (Figure 2, 204) a response (Figure 5, 546) to the sentiment AI prompt from the domain sentiment AI model. The response to the sentiment AI prompt comprises an indication (Figure 5, 548) of the domain-specific negative sentiment. The operations further comprise causing (Figure 2, 206) the indication of the domain-specific negative sentiment to be converted into a query (Figure 5, 554) that describes a domain-specific issue. The operations further comprise causing (Figure 2, 208) a passage ranking AI model (Figure 5, 526) to rank passages (Figure 5, 572), which are included in domain-specific documents, to provide relevancy ranks, which represent relevancies of the passages with regard to mitigation of the domain-specific issue, by providing a ranking AI prompt (Figure 5, 574) together with the passages and the query as inputs to the passage ranking AI model. The ranking AI prompt requests that the passage ranking AI model rank the passages based on relevancy to the mitigation of the domain-specific issue. The passages and the query comprise context regarding the ranking AI prompt. The operations further comprise receiving (Figure 2, 210) a response (Figure 5, 576) to the ranking AI prompt from the passage ranking AI model. The response to the ranking AI prompt comprises an indication (Figure 5, 578) of the relevancy ranks of the passages. The operations further comprise identifying (Figure 2, 212) a subset (Figure 5, 582) of the passages such that the relevancy rank of each passage in the subset satisfies a relevancy criterion. The operations further comprise causing (Figure 2, 214) a response (Figure 5, 588) to the query to be generated using information in the subset of the passages. The response to the query specifying a mitigating factor that mitigates the domain-specific issue. The operations further comprise presenting (Figure 2, 216) the response to the query to the second user via a user interface.

(F1) A second example computer program product (Figure 6, 624; Figure 7, 718, 722) comprises a computer-readable storage medium having instructions recorded thereon for enabling a processor-based system (Figure 1, 102A-102M, 106A-106N; Figure 5, 500; Figure 6, 602; Figure 7, 700) to perform operations. The operations comprise causing (Figure 2, 202) a first AI model (Figure 5, 514) to detect a domain-specific negative sentiment, which is associated with a designated domain, in a statement of a first user, which is included in a domain-specific dialog (Figure 5, 540) that represents a domain-specific conversation between the first user and a second user, in real-time during the domain-specific conversation by providing a first AI prompt (Figure 5, 542) together with at least a portion (Figure 5, 544) of the domain-specific dialog as inputs to the first AI model. The first AI prompt requests that the first AI model determine whether the domain-specific dialog includes the domain-specific negative sentiment. The portion of the domain-specific dialog comprises context regarding the first AI prompt. The operations further comprise receiving (Figure 2, 204) a response (Figure 5, 546) to the first AI prompt from the first AI model. The response to the first AI prompt comprises an indication (Figure 5, 548) of the domain-specific negative sentiment. The operations further comprise causing (Figure 2, 206) the indication of the domain-specific negative sentiment to be converted into a query (Figure 5, 554) that describes a domain-specific issue. The operations further comprise causing (Figure 2, 208) a second AI model (Figure 5, 526) to rank passages (Figure 5, 572), which are included in domain-specific documents, to provide ranks (Figure 5, 578), which represent relevancies of the passages with regard to mitigation of the domain-specific issue, by providing a second AI prompt (Figure 5, 574) together with the passages and the query as inputs to the second AI model. The second AI prompt requests that the second AI model rank the passages by mitigation of the domain-specific issue. The passages and the query comprise context regarding the second AI prompt. The operations further comprise receiving (Figure 2, 210) a response (Figure 5, 576) to the second AI prompt from the second AI model, the response to the second AI prompt comprising the ranks of the passages. The operations further comprise identifying (Figure 2, 212) a subset (Figure 5, 582) of the passages such that the rank of each passage in the subset satisfies a criterion. The operations further comprise causing (Figure 2, 214) a response (Figure 5, 588) to the query to be generated using information in the subset of the passages. The response to the query specifies a mitigating factor that mitigates the domain-specific issue. The operations further comprise triggering any of: presentation (Figure 2, 216) of the response to the query to the second user via a user interface; automatic execution of the mitigating factor.

### III. Example Computer System

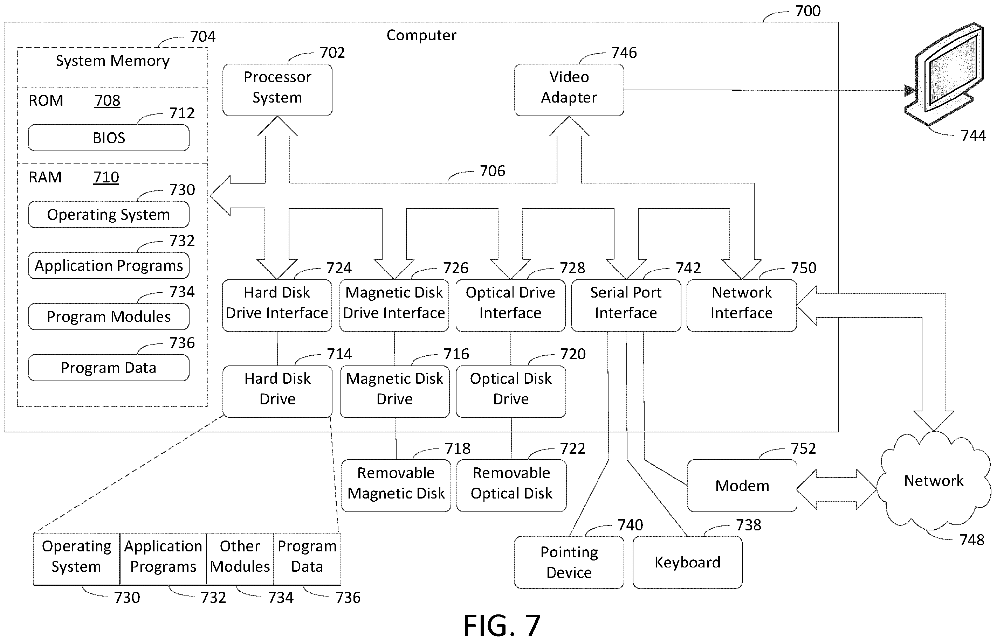

FIG. 7 depicts an example computer 700 in which embodiments may be implemented. Any one or more of the user devices 102A-102M and/or any one or more of the servers 106A-106N shown in FIG. 1 and/or the computing system 500 shown in FIG. 5 may be implemented using computer 700, including one or more features of computer 700 and/or alternative features. Computer 700 may be a general-purpose computing device in the form of a conventional personal computer, a mobile computer, or a workstation, for example, or computer 700 may be a special purpose computing device. The description of computer 700 provided herein is provided for purposes of illustration, and is not intended to be limiting. Embodiments may be implemented in further types of computer systems, as would be known to persons skilled in the relevant art(s).

As shown in FIG. 7, computer 700 includes a processor system 702, a system memory 704, and a bus 706 that couples various system components including system memory 704 to processor system 702. Bus 706 represents one or more of any of several types of bus structures, including a memory bus or memory controller, a peripheral bus, an accelerated graphics port, and a processor or local bus using any of a variety of bus architectures. System memory 704 includes read only memory (ROM) 708 and random access memory (RAM) 710. A basic input/output system 712 (BIOS) is stored in ROM 708.

Computer 700 also has one or more of the following drives: a hard disk drive 714 for reading from and writing to a hard disk, a magnetic disk drive 716 for reading from or writing to a removable magnetic disk 718, and an optical disk drive 720 for reading from or writing to a removable optical disk 722 such as a CD ROM, DVD ROM, or other optical media. Hard disk drive 714, magnetic disk drive 716, and optical disk drive 720 are connected to bus 706 by a hard disk drive interface 724, a magnetic disk drive interface 726, and an optical drive interface 728, respectively. The drives and their associated computer-readable storage media provide nonvolatile storage of computer-readable instructions, data structures, program modules and other data for the computer. Although a hard disk, a removable magnetic disk and a removable optical disk are described, other types of computer-readable storage media can be used to store data, such as flash memory cards, digital video disks, random access memories (RAMs), read only memories (ROM), and the like.

A number of program modules may be stored on the hard disk, magnetic disk, optical disk, ROM, or RAM. These programs include an operating system 730, one or more application programs 732, other program modules 734, and program data 736. Application programs 732 or program modules 734 may include, for example, computer program logic for implementing any one or more of (e.g., at least a portion of) the real-time domain-specific issue logic 108, the real-time domain-specific issue logic 508, the store 510, the domain sentiment logic 512, the domain sentiment AI model 514, the sentiment conversion logic 516, the sentiment conversion AI model 518, the issue classification logic 520, the issue classification AI model 522, the passage ranking logic 524, the passage ranking AI model 526, the passage classification logic 528, the passage classification AI model 530, the criterion satisfaction logic 532, the response generation logic 534, the response generation AI model 536, the presentation logic 538, flowchart 200 (including any step of flowchart 200), flowchart 300 (including any step of flowchart 300), and/or flowchart 400 (including any step of flowchart 400), as described herein.

A user may enter commands and information into the computer 700 through input devices such as keyboard 738 and pointing device 740. Other input devices (not shown) may include a microphone, joystick, game pad, satellite dish, scanner, touch screen, camera, accelerometer, gyroscope, or the like. These and other input devices are often connected to the processor system 702 through a serial port interface 742 that is coupled to bus 706, but may be connected by other interfaces, such as a parallel port, game port, or a universal serial bus (USB).

A display device 744 (e.g., a monitor) is also connected to bus 706 via an interface, such as a video adapter 746. In addition to display device 744, computer 700 may include other peripheral output devices (not shown) such as speakers and printers.

Computer 700 is connected to a network 748 (e.g., the Internet) through a network interface or adapter 750, a modem 752, or other means for establishing communications over the network. Modem 752, which may be internal or external, is connected to bus 706 via serial port interface 742.

As used herein, the terms "computer program medium" and "computer-readable storage medium" are used to generally refer to media (e.g., non-transitory media) such as the hard disk associated with hard disk drive 714, removable magnetic disk 718, removable optical disk 722, as well as other media such as flash memory cards, digital video disks, random access memories (RAMs), read only memories (ROM), and the like. A computer-readable storage medium is not a signal, such as a carrier signal or a propagating signal. For instance, a computer-readable storage medium may not include a signal. Accordingly, a computer-readable storage medium does not constitute a signal per se. Such computer-readable storage media are distinguished from and nonoverlapping with communication media (do not include communication media). Communication media embodies computer-readable instructions, data structures, program modules or other data in a modulated data signal such as a carrier wave. The term "modulated data signal" means a signal that has one or more of its characteristics set or changed in such a manner as to encode information in the signal. By way of example, and not limitation, communication media includes wireless media such as acoustic, RF, infrared and other wireless media, as well as wired media. Example embodiments are also directed to such communication media.

As noted above, computer programs and modules (including application programs 732 and other program modules 734) may be stored on the hard disk, magnetic disk, optical disk, ROM, or RAM. Such computer programs may also be received via network interface 750 or serial port interface 742. Such computer programs, when executed or loaded by an application, enable computer 700 to implement features of embodiments discussed herein. Accordingly, such computer programs represent controllers of the computer 700.

Example embodiments are also directed to computer program products comprising software (e.g., computer-readable instructions) stored on any computer-useable medium. Such software, when executed in one or more data processing devices, causes data processing device(s) to operate as described herein. Embodiments may employ any computer-useable or computer-readable medium, known now or in the future. Examples of computer-readable mediums include, but are not limited to storage devices such as RAM, hard drives, floppy disks, CD ROMs, DVD ROMs, zip disks, tapes, magnetic storage devices, optical storage devices, MEMS-based storage devices, nanotechnology-based storage devices, and the like.

It will be recognized that the disclosed technologies are not limited to any particular computer or type of hardware. Certain details of suitable computers and hardware are well known and need not be set forth in detail in this disclosure.

### IV. Conclusion

The foregoing detailed description refers to the accompanying drawings that illustrate exemplary embodiments of the present invention. However, the scope of the present invention is not limited to these embodiments, but is instead defined by the appended claims. Thus, embodiments beyond those shown in the accompanying drawings, such as modified versions of the illustrated embodiments, may nevertheless be encompassed by the present invention.

References in the specification to "one embodiment," "an embodiment," "an example embodiment," or the like, indicate that the embodiment described may include a particular feature, structure, or characteristic, but every embodiment may not necessarily include the particular feature, structure, or characteristic. Moreover, such phrases are not necessarily referring to the same embodiment. Furthermore, when a particular feature, structure, or characteristic is described in connection with an embodiment, it is submitted that it is within the knowledge of one skilled in the relevant art(s) to implement such feature, structure, or characteristic in connection with other embodiments whether or not explicitly described.

Descriptors such as "first", "second", "third", etc. are used to reference some elements discussed herein. Such descriptors are used to facilitate the discussion of the example embodiments and do not indicate a required order of the referenced elements, unless an affirmative statement is made herein that such an order is required.

Although the subject matter has been described in language specific to structural features and/or acts, it is to be understood that the subject matter defined in the appended claims is not necessarily limited to the specific features or acts described above. Rather, the specific features and acts described above are disclosed as examples of implementing the claims, and other equivalent features and acts are intended to be within the scope of the claims.

## Claims

1. A system (102A-102M, 106A-106N, 500, 602, 700) comprising:
a processor system (610, 702); and
a memory (620, 622, 624, 704, 708, 710) that stores computer-executable instructions that are executable by the processor system (610, 702) to at least:
cause (202) a first AI model (514) to detect a domain-specific negative sentiment, which is associated with a designated domain, in a statement of a first user, which is included in a domain-specific dialog (540) that represents a domain-specific conversation between the first user and a second user, in real-time during the domain-specific conversation by providing a first AI prompt (542) together with at least a portion (544) of the domain-specific dialog (540) as inputs to the first AI model (514), the first AI prompt (542) requesting that the first AI model (514) determine whether the domain-specific dialog (540) includes the domain-specific negative sentiment, wherein the portion (544) of the domain-specific dialog (540) comprises context regarding the first AI prompt (542);
receive (204) a response (546) to the first AI prompt (542) from the first AI model (514), the response (546) to the first AI prompt (542) comprising an indication (548) of the domain-specific negative sentiment;
cause (206) the indication (548) of the domain-specific negative sentiment to be converted into a query (554) that describes a domain-specific issue;
cause (208) a second AI model (526) to rank passages (572), which are included in domain-specific documents, to provide ranks (578), which represent relevancies of the passages (572) with regard to mitigation of the domain-specific issue, by providing a second AI prompt (574) together with the passages (572) and the query (554) as inputs to the second AI model (526), the second AI prompt (574) requesting that the second AI model (526) rank the passages (572) by mitigation of the domain-specific issue, wherein the passages (572) and the query (554) comprise context regarding the second AI prompt (574);
receive (210) a response (576) to the second AI prompt (574) from the second AI model (526), the response (576) to the second AI prompt (574) comprising the ranks (578) of the passages (572);
identify (212) a subset (582) of the passages (572) such that the rank of each passage in the subset (582) satisfies a criterion;
cause (214) a response (588) to the query (554) to be generated using information in the subset (582) of the passages (572), the response (588) to the query (554) specifying a mitigating factor that mitigates the domain-specific issue; and
trigger any of:
presentation (216) of the response (588) to the query (554) to the second user via a user interface;
automatic execution of the mitigating factor.

2. The system of claim 1, wherein the domain-specific issue is security of an account; and
wherein the mitigating factor is a computer-executable instruction to block the account.

3. The system of claim 1, wherein the domain-specific issue is quality of transmission over a communications link; and
wherein the mitigating factor is a computer-executable instruction to increase an amount of bandwidth of the communications link.

4. The system of any preceding claim, wherein the computer-executable instructions are executable by the processor system to at least:
cause a third AI model to convert the indication of the domain-specific negative sentiment into the query that describes the domain-specific issue by providing a third AI prompt together with the indication of the domain-specific negative sentiment and at least the portion of the domain-specific dialog as inputs to the third AI model, the third AI prompt requesting that the third AI model convert the indication of the domain-specific negative sentiment into the query, wherein the indication of the domain-specific negative sentiment and at least the portion of the domain-specific dialog comprise context regarding the third AI prompt; and
receive a response to the third AI prompt from the third AI model, the response to the third AI prompt comprising the query.

5. The system of any preceding claim, wherein the computer-executable instructions are executable by the processor system to at least:
cause a third AI model to classify the domain-specific issue in a valid domain-specific issue class or an invalid domain-specific issue class by providing a third AI prompt together with the query as inputs to the third AI model, the third AI prompt requesting that the third AI model choose between the valid domain-specific issue class and the invalid domain-specific issue class in which to classify the domain-specific issue, wherein the query comprises context regarding the third AI prompt, wherein classification of the domain-specific issue in the valid domain-specific issue class indicates that the domain-specific issue is a valid domain-specific issue, and wherein classification of the domain-specific issue in the invalid domain-specific issue class indicates that the domain-specific issue is not a valid domain-specific issue;
receive a response to the third AI prompt from the third AI model, the response to the third AI prompt comprising an indication that the domain-specific issue is classified in the valid domain-specific issue class; and
cause the second AI model to rank the passages based at least on the domain-specific issue being classified in the valid domain-specific issue class.

6. The system of any of claims 1 to 4, wherein the computer-executable instructions are executable by the processor system to at least:
cause a third AI model to classify each passage of a plurality of passages, which are included in the domain-specific documents, in a relevant class or an irrelevant class by providing a third AI prompt together with the plurality of passages and the query as inputs to the third AI model, the third AI prompt requesting that the third AI model choose between the relevant class and the irrelevant class in which to classify each passage of the plurality of passages, wherein the plurality of passages and the query comprise context regarding the third AI prompt, wherein classification of a passage in the relevant class indicates that the passage is relevant to the mitigation of the domain-specific issue, and wherein classification of a passage in the irrelevant class indicates that the passage is not relevant to the mitigation of the domain-specific issue;
receive a response to the third AI prompt from the third AI model, the response to the third AI prompt comprising an indication of which of the plurality of passages are classified in the relevant class; and
cause the second AI model to rank the passages based at least on the passages being classified in the relevant class.

7. The system of any preceding claim, wherein the computer-executable instructions are executable by the processor system to at least:
cause a third AI model to generate the response to the query by providing a third AI prompt together with the subset of the passages and the query as inputs to the third AI model, the third AI prompt requesting that the third AI model generate the response to the query, wherein the subset of the passages and the query comprise context regarding the third AI prompt; and
receive a response to the third AI prompt from the third AI model, the response to the third AI prompt comprising the response to the query.

8. The system of any preceding claim, wherein the response to the query has at least one of the following:
a tone that corresponds to a reference tone of the second user,
a style that corresponds to a reference style of the second user, or
a personality that corresponds to a reference personality of the second user.

9. The system of any preceding claim, wherein the computer-executable instructions are executable by the processor system further to at least:
select the passages from a plurality of passages based at least on the passages being created on or after a specified date.

10. The system of any preceding claim, wherein the computer-executable instructions are executable by the processor system further to at least:
cause a citation that cites the information in the subset of the passages, which is used to generate the response to the query, to be generated; and
present the citation to the second user via the user interface.

11. The system of any preceding claim, wherein the computer-executable instructions are executable by the processor system to at least:
cause the first AI model to detect the domain-specific negative sentiment in the statement of the first user based at least on a tone of the first user that is indicated by the statement.

12. A method implemented by a computing system (102A-102M, 106A-106N, 500, 602, 700), the method comprising:
detecting (202) a domain-specific negative sentiment, which is associated with a designated domain, in a statement of a first user, which is included in a domain-specific dialog (540) that represents a domain-specific conversation between the first user and a second user, in real-time during the domain-specific conversation by providing a first AI prompt (542) together with at least a portion (544) of the domain-specific dialog (540) as inputs to a first AI model (514), which causes the first AI model (514) to generate a response (546) to the first AI prompt (542),
wherein the first AI prompt (542) inquires whether the domain-specific dialog (540) includes the domain-specific negative sentiment,
wherein the portion (544) of the domain-specific dialog (540) comprises context regarding the first AI prompt (542), and
wherein the response (546) to the first AI prompt (542) comprises an indication (548) of the domain-specific negative sentiment;
converting (206) the indication (548) of the domain-specific negative sentiment into a query (554) that describes a domain-specific issue;
ranking (208) passages (572), which are included in domain-specific documents, to provide ranks (578), which represent relevancies of the passages (572) with regard to mitigation of the domain-specific issue, by providing a second AI prompt (574) together with the passages (572) and the query (554) as inputs to a second AI model (526), which causes the second AI model (526) to generate a response (576) to the second AI prompt (574),
wherein the second AI prompt (574) requests that the second AI model (526) rank the passages (572) with regard to relevancy to the mitigation of the domain-specific issue,
wherein the passages (572) and the query (554) comprise context regarding the second AI prompt (574), and
wherein the response (576) to the second AI prompt (574) comprises the ranks (578) of the passages (572);
identifying (212) a subset (582) of the passages (572) such that the rank of each passage in the subset (582) satisfies a criterion;
generating (214) a response (588) to the query (554) using information in the subset (582) of the passages (572), the response (588) to the query (554) specifying a mitigating factor that mitigates the domain-specific issue; and
triggering any of:
presentation (216) of the response (588) to the query (554) to the second user via a user interface;
automatic execution of the mitigating factor.

13. The method of claim 12, wherein the domain-specific issue is security of an account; and
wherein the mitigating factor is a computer-executable instruction to block the account.

14. The method of claim 12, wherein the domain-specific issue is quality of transmission over a communications link; and
wherein the mitigating factor is a computer-executable instruction to increase an amount of bandwidth of the communications link.

15. The method of any of claims 12 to 14, wherein converting the indication of the domain-specific negative sentiment into the query comprises:
converting the indication of the domain-specific negative sentiment into the query that describes the domain-specific issue by providing a third AI prompt together with the indication of the domain-specific negative sentiment and at least the portion of the domain-specific dialog as inputs to a third AI model, which causes the third AI model to generate a response to the third AI prompt;
wherein the third AI prompt requests that the third AI model convert the indication of the domain-specific negative sentiment into the query;
wherein the indication of the domain-specific negative sentiment and at least the portion of the domain-specific dialog comprise context regarding the third AI prompt; and
wherein the response to the third AI prompt comprises the query.
